(19) Europäisches Patentamt
European Patent Office
Office européen des brevets

(11) **EP 4 280 746 A1**

(12) **EUROPEAN PATENT APPLICATION**
published in accordance with Art. 153(4) EPC

(43) Date of publication:
**22.11.2023 Bulletin 2023/47**

(21) Application number: **21919167.3**

(22) Date of filing: **29.12.2021**

(51) International Patent Classification (IPC):
**H04W 72/04** (2023.01)

(52) Cooperative Patent Classification (CPC):
**H04L 5/00; H04W 72/04**

(86) International application number:
**PCT/CN2021/142687**

(87) International publication number:
**WO 2022/151980 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021 CN 202110057561**

(71) Applicant: **Datang Mobile Communications
Equipment Co., Ltd.
Beijing 100085 (CN)**

(72) Inventors:
• **FEI, Yongqiang
Beijing 100085 (CN)**
• **GAO, Xuejuan
Beijing 100085 (CN)**
• **XING, Yanping
Beijing 100085 (CN)**

(74) Representative: **Studio Torta S.p.A.
Via Viotti, 9
10121 Torino (IT)**

(54) **RESOURCE INDICATION METHOD AND APPARATUS, AND STORAGE MEDIUM**

(57) Provided are a resource indication method and apparatus, a storage medium, a processor-readable storage medium, a computer program product and a computer program. The resource indication method includes: sending resource indication information of a transport block (TB) to a terminal device, in which the TB occupies a target symbol resource of at least one target slot; and the resource indication information is used for indicating the slot number of target slots, and/or is used for indicating the number of symbols of the target symbol resource.

the network device sends resource indication information of a TB to a terminal device, the TB occupies one or more target symbol resources of at least one target slot, and the resource indication information is configured to indicate a number of slots of the target slot, and/or, a number of symbols of the one or more target symbol resources

101

FIG. 3

**Description**

**CROSS REFERENCE TO RELATED APPLICATIONS**

This application claims priority to Chinese Patent Application No. 202110057561.5, filed on January 15, 2021, the entire contents of which are incorporated herein by reference.

**TECHNICAL FIELD**

The disclosure relates to a field of wireless communication technology, in particular to a resource indication method, a resource indication apparatus and a storage medium.

**BACKGROUND**

In a New Radio (NR) system based on the fifth generation (5G) mobile communication technology, the propagation loss of wireless signals increases with the increase of a deployment frequency of the NR system, which leads to reduction of a transmission distance of signals and degradation of network coverage performance. Especially for uplink transmission in which the terminal device is used for sending data and the network device is used for receiving data, a coverage range of an uplink channel is more limited than that of a downlink channel due to a low transmission power of the terminal device.

The Physical Uplink Shared Channel (PUSCH) is an important uplink transmission channel in the NR. Usually, the network device can schedule the terminal device to send the PUSCH through Downlink Control Information (DCI), or configure a semi-static resource through a Radio Resource Control (RRC) signaling to cause the terminal device to send the PUSCH autonomously. The PUSCH sent by the terminal device to the network device carries data information such as Transport Block (TB). However, for the terminal device located in areas with greater declines such as cell edges or basements, the PUSCH transmitted by it has a higher propagation loss, so that a coverage enhancement needs to be performed.

Currently, the coverage enhancement can be performed by repetition transmission. However, since each repeated TB is encoded separately, it may lead to degradation of transmission performance because a length of the encoded code is too short and a coding rate (ratio of a TB size to a total size) is too high, thereby reducing the effectiveness of coverage enhancement.

**SUMMARY**

Embodiments of the disclosure provide a resource indication method, a resource indication apparatus, a device and a storage medium.

According to a first aspect of the embodiments of the disclosure, a resource indication method is provided. The method is applicable to a network device and includes:

sending resource indication information of a Transport Block (TB) to a terminal device, in which the TB occupies one or more target symbol resources of at least one target slot;
in which the resource indication information is used to indicate a number of slots of the target slot, and/or, the resource indication information is used to indicate a number of symbols of the one or more target symbol resources.

In some embodiments, the resource indication information includes a first Time Domain Resource Allocation (TDRA) table; in which

the first TDRA table includes at least one PUSCH allocation information element, and the at least one PUSCH allocation information element includes start and length indication information;
the start and length indication information is a Start And Length Indicator Value (SLIV), the SLIV is used to indicate a start symbol position of the first one of the one or more target symbol resources in the first one of the at least one target slot, or, the SLIV is used to indicate a start symbol position and a symbol length of the target symbol resource in each target slot;
or,
the start and length indication information includes start symbol indication information S and symbol length indication information L, the start symbol indication information S is used to indicate a start symbol position of the first one of the one or more target symbol resources in the first one of the at least one target slot, or, the start symbol indication information S is used to indicate a start symbol position of the target symbol resource in each target slot; the symbol length indication information L is used to indicate a symbol length of the first one of the one or more target symbol resources in the first one of the at least one target slot, or, the symbol length indication information L is used to indicate a symbol length of the target symbol resource in each target slot.

In some embodiments, the resource indication information further includes slot number indication information,

the slot number indication information is included in the PUSCH allocation information element, and the slot number indication information is used to indicate a number of slots of a target slot corresponding to the PUSCH allocation information element; or,
the slot number indication information is not included in the PUSCH allocation information element, and the slot number indication information is used to indicate a number of slots of a target slot corresponding to any PUSCH allocation information element.

In some embodiments, the resource indication information includes repetition number indication information, and the repetition number indication information is used to determine the number of slots of the target slot; or,
the resource indication information includes repetition number indication information and reuse indication information, in which the repetition number indication information is used to determine the number of slots of the target slot in the case that the reuse indication information is a predefined value or a predefined state.

In some embodiments, the resource indication information includes the repetition number indication information, and the resource indication method further includes:
sending first DCI for scheduling the TB to the terminal device, in which the first DCI includes reuse indication information, and the repetition number indication information is used to determine the number of slots of the target slot in the case that the reuse indication information is a predefined value or a predefined state.

In some embodiments, the resource indication method further includes:

sending second DCI for scheduling the TB to the terminal device, the second DCI including a first indication field;
in which the first indication field is used to indicate the number of slots of the target slot, in which the number of slots indicated by the first indication field is determined based on the number of slots indicated by the resource indication information.

In some embodiments, the resource indication information includes a second TDRA table;

in which the second TDRA table includes at least one PUSCH allocation information element, the at least one PUSCH allocation information element includes a list of start and length indication information;
the list of start and length indication information includes a plurality of pieces of start and length indication information, a number of pieces of start and length indication information in a valid state included in the list of start and length indication information is equal to the number of slots of the target slot; and
the start and length indication information in the valid state in the list of start and length indication information is used to indicate a start symbol position and a symbol length of the target symbol resource in each target slot.

In some embodiments, the resource indication information includes a third TDRA table;

in which the third TDRA table includes at least one PUSCH allocation information element, the at least one PUSCH allocation information element includes slot indication information and start and length indication information;
the slot indication information is used to indicate a start slot position and a number of slots of a plurality of the target slots; and
the start and length indication information is used to indicate a start symbol position of the first one of the one or more target symbol resources in the first one of the at least one target slot, or, the start and length indication information is used to indicate a start symbol position and a symbol length of the target symbol resource in each target slot.

In some embodiments, the resource indication information includes a fourth TDRA table;

in which the fourth TDRA table includes at least one PUSCH allocation information element, the at least one PUSCH allocation information element includes a SLIV;
in response to the SLIV falling within a first interval, the PUSCH allocation information element corresponds to one target slot, and the SLIV is used to indicate a start symbol position and a symbol length of the target symbol resource in the target slot; or

in response to the SLIV falling within a second interval, the PUSCH allocation information element corresponds to a plurality of target slots, and the SLIV is used to indicate a start slot position and a slot length of the plurality of target slots; and

the first interval and the second interval have no intersection.

In some embodiments, two or more TBs are received based on the resource indication information, in which adjacent TBs of the two or more TBs have different redundant versions, or adjacent TBs of the two or more TBs have different information bits, and each TB of the two or more TBs includes a same number of target slots, and respective target slot includes target symbol resources with a same number of symbols and a same symbol position.

In some embodiments, each target slot includes one target symbol resource, and target symbol resource in respective target slots have a same start symbol position and a same symbol length.

In some embodiments, in the target symbol resources occupied by the TB, symbols occupied by adjacent target symbol resources are adjacent to each other, or, adjacent target symbol resources are separated by an unavailable symbol and are not separated by an available symbol.

According to a second aspect of the embodiments of the disclosure, a resource indication method is provided. The method is applicable to a terminal device, and includes:

receiving resource indication information of a TB sent by a network device, in which the TB occupies one or more target symbol resources of at least one target slot;

in which the resource indication information is used to indicate a number of slots of the target slot, and/or, the resource indication information is used to indicate a number of symbols of the one or more target symbol resources.

In some embodiments, the resource indication information includes a first TDRA table; in which,

the first TDRA table includes at least one PUSCH allocation information element, and the at least one PUSCH allocation information element includes start and length indication information;

the start and length indication information is a SLIV, the SLIV is used to indicate a start symbol position of the first one of the one or more target symbol resources in the first one of the at least one target slot, or, the SLIV is used to indicate a start symbol position and a symbol length of the target symbol resource in each target slot; or,

the start and length indication information includes start symbol indication information S and symbol length indication information L, the start symbol indication information S is used to indicate a start symbol position of the first one of the one or more target symbol resources in the first one of the at least one target slot, or, the start symbol indication information S is used to indicate a start symbol position of the target symbol resource in each target slot; the symbol length indication information L is used to indicate a symbol length of the first one of the one or more target symbol resources in the first one of the at least one target slot, or, the symbol length indication information L is used to indicate a symbol length of the target symbol resource in each target slot.

In some embodiments, the resource indication information further includes slot number indication information,

in which the slot number indication information is included in the PUSCH allocation information element, and the slot number indication information is used to indicate a number of slots of a target slot corresponding to the PUSCH allocation information element; or,

the slot number indication information is not included in the PUSCH allocation information element, and the slot number indication information is used to indicate a number of slots of a target slot corresponding to any PUSCH allocation information element.

In some embodiments, the resource indication information includes repetition number indication information, and the repetition number indication information is used to determine the number of slots of the target slot; or,

the resource indication information includes repetition number indication information and reuse indication information, in which the repetition number indication information is used to determine the number of slots of the target slot in the case that the reuse indication information is a predefined value or a predefined state.

In some embodiments, the resource indication information includes the repetition number indication information, and the resource indication method further includes:

receiving first DCI for scheduling the TB sent by the network device, in which the first DCI includes reuse indication information, and the repetition number indication information is used to determine the number of slots of the target slot in the case that the reuse indication information is a predefined value or a predefined state.

In some embodiments, the resource indication method further includes:

receiving second DCI for scheduling the TB sent by the network device, the second DCI including a first indication field; in which the first indication field is used to indicate the number of slots of the target slot, in which the number of slots indicated by the first indication field is determined based on the number of slots indicated by the resource indication information.

In some embodiments, the resource indication information includes a second TDRA table; in which,

the second TDRA table includes at least one PUSCH allocation information element, the at least one PUSCH allocation information element includes a list of start and length indication information; the list of start and length indication information includes a plurality of pieces of start and length indication information, a number of pieces of start and length indication information in a valid state included in the list of start and length indication information is equal to the number of slots of the target slot; and the start and length indication information in the valid state in the list of start and length indication information is used to indicate a start symbol position and a symbol length of the target symbol resource in each target slot.

In some embodiments, the resource indication information includes a third TDRA table; in which,

the third TDRA table includes at least one PUSCH allocation information element, the at least one PUSCH allocation information element includes slot indication information and start and length indication information; the slot indication information is used to indicate a start slot position and a number of slots of a plurality of the target slots; and the start and length indication information is used to indicate a start symbol position of the first one of the one or more target symbol resources in the first one of the at least one target slot, or, the start and length indication information is used to indicate a start symbol position and a symbol length of the target symbol resource in each target slot.

In some embodiments, the resource indication information includes a fourth TDRA table; in which,

the fourth TDRA table includes at least one PUSCH allocation information element, the at least one PUSCH allocation information element includes a SLIV; in response to the SLIV falling within a first interval, the PUSCH allocation information element corresponds to one target slot, and the SLIV is used to indicate a start symbol position and a symbol length of the target symbol resource in the target slot; or in response to the SLIV falling within a second interval, the PUSCH allocation information element corresponds to a plurality of target slots, and the SLIV is used to indicate a start slot position and a slot length of the plurality of target slots; and the first interval and the second interval have no intersection.

In some embodiments, two or more TBs are sent based on the resource indication information, in which adjacent TBs of the two or more TBs have different redundant versions, or adjacent TBs of the two or more TBs have different information bits, and each TB of the two or more TBs includes a same number of the target slots, and respective target slot includes target symbol resources with a same number of symbols and a same symbol position.

In some embodiments, each target slot includes one target symbol resource, and target symbol resources in respective target slots have a same start symbol position and a same symbol length.

In some embodiments, in the target symbol resources occupied by the TB, symbols occupied by adjacent target symbol resources are adjacent to each other, or, adjacent target symbol resources are separated by an unavailable symbol and are not separated by an available symbol.

According to a third aspect of the embodiments of the disclosure, a resource indication apparatus is provided. The apparatus is applicable to a network device, and includes:

a memory, a transceiver and a processor; in which, the memory is configured to store computer programs, the transceiver is configured to send and receive data under control of the processor, and the processor is configured to read the computer programs in the memory and perform the following operations: sending resource indication information of a TB to a terminal device, in which the TB occupies one or more target symbol resources of at least one target slot;
in which the resource indication information is used to indicate a number of slots of the target slot, and/or, the resource indication information is used to indicate a number of symbols of the one or more target symbol resources.

According to a fourth aspect of the embodiments of the disclosure, a resource indication apparatus is provided. The apparatus is applicable to a terminal device, and includes: a memory, a transceiver and a processor, in which,

the memory is configured to store computer programs, the transceiver is configured to send and receive data under control of the processor, and the processor is configured to read the computer programs in the memory and perform the following operations:
receiving resource indication information of a TB sent by a network device, in which the TB occupies one or more target symbol resources of at least one target slot;
in which the resource indication information is used to indicate a number of slots of the target slot, and/or, the resource indication information is used to indicate a number of symbols of the one or more target symbol resources.

According to a fifth aspect of the embodiments of the disclosure, a resource indication apparatus is provided. The apparatus is applicable to a network device, and includes:

a sending unit, configured to send resource indication information of a TB to a terminal device, in which the TB occupies one or more target symbol resources of at least one target slot;
in which the resource indication information is used to indicate a number of slots of the target slot, and/or, the resource indication information is used to indicate a number of symbols of the one or more target symbol resources.

According to a sixth aspect of the embodiments of the disclosure, a resource indication apparatus is provided. The apparatus is applicable to a terminal device, and includes:

a receiving unit, configured to receive resource indication information of a TB sent by a network device, in which the TB occupies one or more target symbol resources of at least one target slot;
in which the resource indication information is used to indicate a number of slots of the target slot, and/or, the resource indication information is used to indicate a number of symbols of the one or more target symbol resources.

According to a seventh aspect of the embodiments of the disclosure, a processor-readable storage medium having computer programs stored thereon is provided. The computer programs are configured to cause a processor to implement the resource indication method of the first aspect of the embodiments.

According to an eighth aspect of the embodiments of the disclosure, a processor-readable storage medium having computer programs stored thereon is provided. The computer programs are configured to cause a processor to implement the resource indication method of the second aspect of the embodiments.

According to a ninth aspect of the embodiments of the disclosure, a computer program product including computer program codes is provided. When the computer program codes are running on a computer, the resource indication method of the first aspect of the embodiments is implemented.

According to a tenth aspect of the embodiments of the disclosure, a computer program product including computer program codes is provided. When the computer program codes are running on a computer, the resource indication method of the second aspect of the embodiments is implemented.

According to an eleventh aspect of the embodiments of the disclosure, a communication device including a processing circuit and an interface circuit is provided. The interface circuit is configured to receive computer codes or instructions and transmit the computer codes or instructions to the processing circuit, and the processing circuit is configured to execute the computer codes or instructions to implement the resource indication method of the first aspect of the embodiments.

According to a twelfth aspect of the embodiments of the disclosure, a communication device including a processing circuit and an interface circuit is provided. The interface circuit is configured to receive computer codes or instructions and transmit the computer codes or instructions to the processing circuit, and the processing circuit is configured to execute the computer codes or instructions to implement the resource indication method of the second aspect of the embodiments.

According to a thirteenth aspect of the embodiments of the disclosure, a computer program including computer program codes is provided. When the computer program codes are running on a computer, the computer is caused to implement the resource indication method of the first aspect of the embodiments.

According to a fourteenth aspect of the embodiments of the disclosure, a computer program including computer program codes is provided. When the computer program codes are running on a computer, the computer is caused to implement the resource indication method of the second aspect of the embodiments.

With the resource indication method, the resource indication apparatus, and the storage medium provided by the embodiments of the disclosure, the network device sends the resource indication information of a TB to the terminal device, in which the TB occupies one or more target symbol resources of at least one target slot. The resource indication information is used to indicate a number of slots of the target slot, and/or, is used to indicate a number of symbols of the one or more target symbol resources. In this way, the terminal device can send the same TB over multiple slots, which can reduce a coding rate of the TB, save a bit overhead for the cyclic redundant check, and increase a code length of the TB, thereby improving transmission performance, and achieving a coverage enhancement.

It should be understood that the content described in this section is not intended to identify key or important features of the embodiments of the disclosure, nor is it intended to limit the scope of the disclosure. Additional features of the disclosure will be easily understood based on the following description.

## BRIEF DESCRIPTION OF THE DRAWINGS

The drawings are used to better understand the solution and do not constitute a limitation to the disclosure, in which:

FIG. 1 is a schematic diagram of the existing transmission of non-repetition, repetition Type A, and repetition Type B of PUSCH.
FIG. 2 is a schematic diagram of comparison of repetition Type A and TB cross-slot transmission according to an embodiment of the disclosure.
FIG. 3 is a flowchart of a resource indication method according to a first embodiment of the disclosure.
FIG. 4 is a schematic diagram of an applicable scenario according to an embodiment of the disclosure.
FIG. 5 is a flowchart of a resource indication method according to a second embodiment of the disclosure.
FIG. 6 is a schematic diagram of addition of indication information to each PUSCH allocation information element according to an embodiment of the disclosure.
FIG. 7 is a flowchart of a resource indication method according to a third embodiment of the disclosure.
FIG. 8 is a flowchart of a resource indication method according to a fourth embodiment of the disclosure.
FIG. 9 is a schematic diagram of transmission Type A according to an embodiment of the disclosure.
FIG. 10 is a schematic diagram of transmission Type B according to an embodiment of the disclosure.
FIG. 11 is a schematic diagram of transmission Type B-2 according to an embodiment of the disclosure.
FIG. 12 is a flowchart of a resource indication method according to a fifth embodiment of the disclosure.
FIG. 13 is a schematic diagram of a SLIV list according to an embodiment of the disclosure.
FIG. 14 is a flowchart of a resource indication method according to a sixth embodiment of the disclosure.
FIG. 15 is a schematic diagram of multiple PUSCH resources indicated by a SLIV' at a slot level according to an embodiment of the disclosure.
FIG. 16 is a flowchart of a resource indication method according to a seventh embodiment of the disclosure.
FIG. 17 is a flowchart of a resource indication method according to an eighth embodiment of the disclosure.
FIG. 18 is a flowchart of a resource indication method according to a ninth embodiment of the disclosure.
FIG. 19 is an example of TB transmission Type A in combination with repetition Type A according to an embodiment of the disclosure.
FIG. 20 is an example of TB transmission Type B in combination with repetition Type A according to an embodiment of the disclosure.
FIG. 21 is a flowchart of a resource indication method according to a tenth embodiment of the disclosure.
FIG. 22 is an example of TB transmission Type B in combination with repetition Type B according to an embodiment of the disclosure.
FIG. 23 is another example of TB transmission Type B in combination with repetition Type B according to an embodiment of the disclosure.
FIG. 24 is a block diagram of a resource indication apparatus according to an eleventh embodiment of the disclosure.
FIG. 25 is a block diagram of a resource indication apparatus according to a twelfth embodiment of the disclosure.
FIG. 26 is a block diagram of a resource indication apparatus according to a thirteenth embodiment of the disclosure.
FIG. 27 is a block diagram of a resource indication apparatus according to a fourteenth embodiment of the disclosure.

## DETAILED DESCRIPTION

The term "and/or" in the embodiment of the disclosure describes the association relation of the associated objects and indicates three relations, for example, A and/or B can indicate the following three cases, i.e., A alone, both A and B, and B alone. The character "/" generally indicates that the associated objects before and after is an "or" relation.

The term "plurality" in the embodiments of the disclosure refers to two or more, and other quantifiers are similar.

The technical solutions in the embodiments of the disclosure will be clearly and completely described below in combination with the accompanying drawings in the embodiments of the disclosure. Obviously, the described embodiments are only a part of the embodiments of the disclosure, and not all of them. Based on the embodiments of the disclosure, all other embodiments obtained by those skilled in the art without inventive works fall within the scope of protection of the disclosure.

In the 5G NR system, the propagation loss of wireless signals increases with the increase of a deployment frequency of the NR system, which leads to reduction of a transmission distance of signals and degradation of network coverage performance. Especially for uplink transmission in which the terminal device is used for sending data and the network device is used for receiving data, a coverage range of an uplink channel is more limited than that of a downlink channel due to a low transmission power of the terminal device.

The PUSCH is an important uplink transmission channel in the NR. Usually, the network device can schedule the terminal device to send the PUSCH through the DCI, or configure a semi-static resource through a RRC signaling to cause the terminal device to send the PUSCH autonomously. The PUSCH sent by the terminal device to the network device carries data information such as TB. However, for the terminal device located in areas with greater declines such as cell edges or basements, the PUSCH transmitted by it has a higher propagation loss, so that a coverage enhancement needs to be performed.

Currently, the coverage enhancement can be performed by repetition transmission. The existing NR supports repetition transmission of PUSCH, and specifically there are two types of repetition transmission, Type A and Type B.

When performing non-repetition transmission of PUSCH, the PUSCH is transmitted in only one slot, the slot includes 14 Orthogonal Frequency Division Multiplex (OFDM) symbols (hereinafter referred to as symbols) under the premise of normal cyclic prefix, and the time domain resource occupied by the PUSCH in one slot is continuous. A combination of a start symbol position S and the number L of occupied symbols of the time domain resource can be one combination indicated through DCI dynamic scheduling sent by the network device among several combinations configured by the network device for the terminal device through RRC configuration.

When performing repetition transmission of PUSCH in the repetition Type A, the PUSCH can be transmitted in multiple slots and each repetition transmission occupies the same time domain symbol in the slot in which the PUSCH is located. If the symbol occupied by a repetition transmission is an unavailable symbol (such as downlink symbol), the terminal device does not send that repetition transmission. The number of repetition transmissions is configured via RRC.

When performing repetition transmission of PUSCH in the repetition Type B, the time domain resource of the first nominal repetition is determined firstly, and then the computation of adjacent repetition resources is performed starting from the first nominal repetition. If the symbol occupied by a nominal repetition is an unavailable symbol (e.g., downlink symbol) or crosses a boundary between slots, the nominal repetition may be split into two or more actual repetitions. At last, the terminal device sends the actual repetition of the PUSCH. The number of repetition transmissions is configured via RRC.

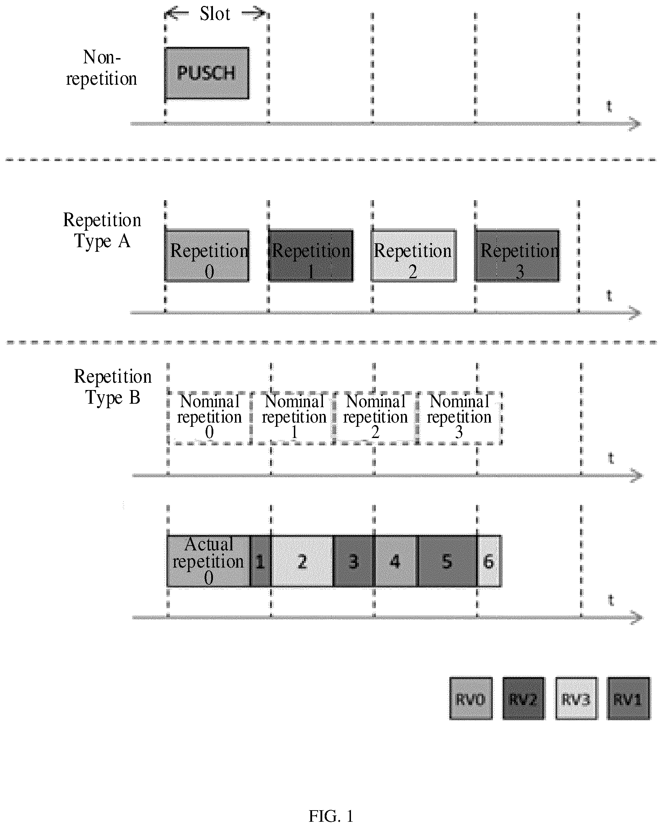

For example, FIG. 1 is a schematic diagram of the existing transmission of non-repetition, repetition Type A, and repetition Type B of PUSCH. RV refers to a redundant version of a Code Block (CB) of the TB after encoding. During repetition transmission, either for the Type A or the Type B, each repetition includes an independent encoded TB, and the corresponding RV is sent cyclically in a certain order, which is either predefined or is predefined and DCI dynamically indicated, e.g., the most common RV order is 0-2-3-1. It can be assumed that, the PUSCH in each repetition is encoded separately for the same TB (especially for the repetition Type B), or after uniform encoding, different encoded bits (corresponding to different RVs) are used separately for sending.

The repetition transmission mechanism in the existing NR enhances a coverage of PUSCH to some extent, but since the TB in each repetition is encoded separately, the transmission performance may be decreased because a length of the encoded code is too short and a coding rate is too high, thereby reducing a coverage enhancement effect.

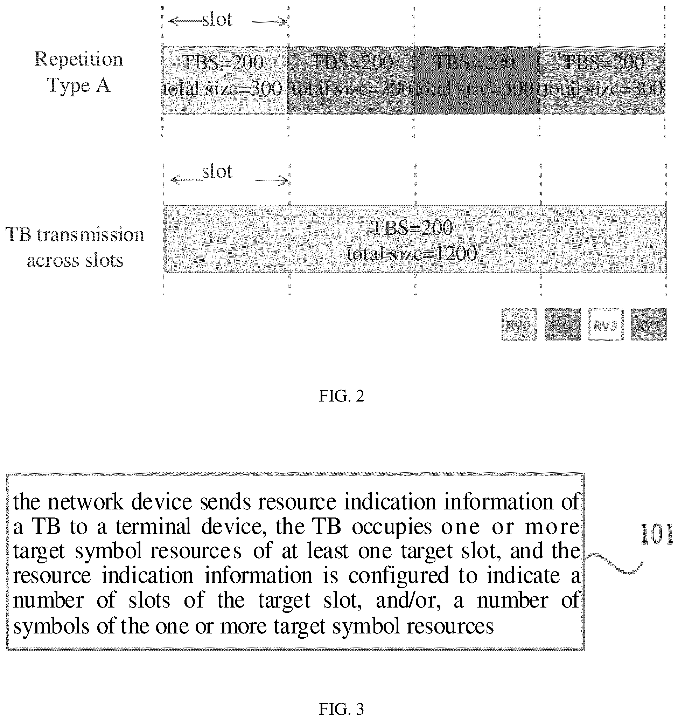

Therefore, one TB may be sent across multiple slots (TB processing over multiple slots) in an embodiment of the disclosure. The method of sending one TB on the PUSCH over multiple slots is understood as that "one encoded TB is transmitted on multiple PUSCHs over multiple slots, each of the multiple PUSCHs carries a portion of the encoded TB", or "one encoded TB is transmitted on one PUSCH, but a length of the PUSCH spans over multiple slots, or the PUSCH includes time domain resources within multiple slots in the time domain". FIG. 2 is a schematic diagram of comparison of repetition Type A and TB cross-slot transmission according to an embodiment of the disclosure. TBS refers to a TB size.

As can be seen from FIG. 2, by transmitting the same TB across multiple slots, the coding rate can be reduced, a bit overhead for the cyclic redundant check can be saved, and a code length of the code can be increased, thereby improving the coding performance, and equivalently realizing the coverage enhancement.

However, the NR currently does not support transmitting the same TB across multiple slots. Especially in terms of time domain resource allocation or TB mapping, the NR does not support allocating cross-slot, jointly encoded time domain resources for one TB transmission, or does not support transmitting one TB on multiple PUSCHs in different slots after uniform joint encoding of the TB.

Therefore, in order to solve the above problems, the embodiments of the disclosure provide a resource indication method and a resource indication apparatus for implementation of transmitting the same TB across multiple slots.

The method and the apparatus are based on the same application concept, and since the method and the apparatus solve the problems with similar principles, the implementations of the apparatus and the method can be cross-referenced, and repetition is not necessary.

The embodiments of the disclosure provide a resource indication method, applicable for a network device. The network device sends resource indication information of a TB to the terminal device, the TB occupies one or more target symbol resources of at least one target slot. The resource indication information is used to indicate the number of slots of the target slot, and/or, the number of symbols of the one or more target symbol resources. In this way, the terminal device can achieve transmission of the same TB over multiple slots, which can reduce the coding rate of the TB, increase the code length of the TB, improve the transmission performance, and achieve the coverage enhancement.

A resource indication method, a resource indication apparatus, and a storage medium provided in this disclosure are described in detail below with reference to the accompanying drawings.

FIG. 3 is a flowchart of a resource indication method according to a first embodiment of the disclosure.

An execution subject of the embodiment of the disclosure is a resource indication apparatus provided in the disclosure, which may be configured in any network device, to enable the network device to perform the resource indication function.

The network device may be a base station, which may include a plurality of cells that provide service to the terminal device. Depending on specific application scenarios, the base station may also be referred to as an access point, or may be a device in an access network that communicates with the wireless terminal device over one or more sectors on the radio interface, or other designations. The network device may be used to interchange received radio frames with Internet Protocol (IP) packets, acting as a router between the wireless terminal device and remaining parts of the access network. The remaining parts of the access network may include an IP communication network. The network device may also coordinate the management of attributes of the radio interface. For example, the network device involved in the embodiments of the disclosure may be a network device (Base Transceiver Station, i.e., BTS) in the Global System for Mobile communications (GSM) or the Code Division Multiple Access (CDMA), a network device (NodeB) in the Wide-band Code Division Multiple Access (WCDMA), an evolutional network device (evolutional Node B, i.e., eNB or e-NodeB) in the Long Term Evolution (LTE) system, a 5G base station (gNB) in a 5G network architecture (next generation system), a home evolved base station (Home evolved Node B (HeNB), a relay node, a home base station (femto), a pico base station (pico), etc., which is not limited in the embodiments of the disclosure. In some network structures, the network device can include a Centralized Unit (CU) node and Distributed Unit (DU) nodes, and the CU and the DUs can also be geographically separated.

Before describing specific embodiments of the disclosure, the application scenarios of the disclosure are described. The disclosure can be applied to the 5G NR system, including the network device and the terminal device. Alternatively, the disclosure can be applied to other systems, as long as the terminal device needs to initiate a random access to the network device.

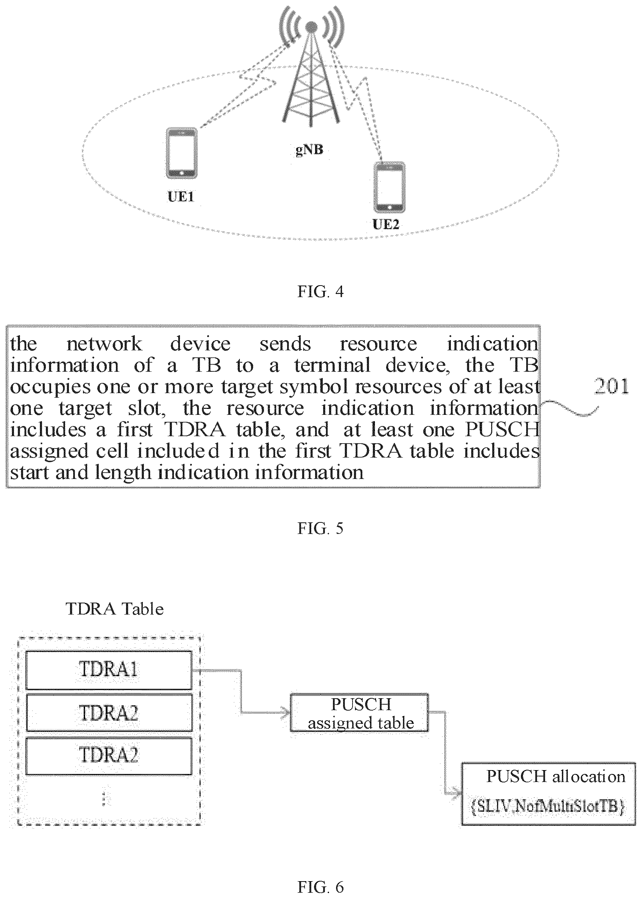

The applicable scenario of the disclosure can be shown in FIG. 4. In FIG. 4, for example, the network device is a gNB, the terminal device is a User Equipment (UE), and there are two terminal devices (i.e., UE1 and UE2). Multiple UEs, including the UE1 and the UE2, initiate a random access to the gNB to request wireless network connection services, and the gNB receives a random access request from at least one UE and provides wireless services for it. In this case, the gNB, the UE1 and the UE2 interact and transmit data with each other through wireless communication.

As shown in FIG. 3, the resource indication method, applicable to a network device, includes the following steps.

At step 101, the network device sends resource indication information of a TB to a terminal device, in which the TB occupies one or more target symbol resources of at least one target slot, and the resource indication information is used to indicate a number of slots of the target slot, and/or, is used to indicate a number of symbols of the one or more target symbol resources.

In the embodiment of the disclosure, the terminal device can be a device that provides voice and/or data connectivity to a user, a handheld device with a wireless connection function, or other processing devices connected to a wireless modem, etc. The designations of the terminal device may be different for different systems. For example, in the 5G system, the terminal device may be called UE. The wireless terminal device may communicate with one or more Core Networks (CNs) via a Radio Access Network (RAN). The wireless terminal device may be a mobile terminal device, such as a mobile phone (or cellular phone) and a computer with the mobile terminal device, such as, a portable, pocket, handheld, computer-built, or vehicle-mounted mobile device, for exchanging language and/or data with the RAN. For example, the wireless terminal device may be a Personal Communication Service (PCS) phone, a cordless phone, a Session Initiated Protocol (SIP) phone, a Wireless Local Loop (WLL) station, a Personal Digital Assistant (PDA) device, etc. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the disclosure.

In the embodiment of the disclosure, the target symbol resource is a symbol resource or a time domain resource occupied by the TB in the target slot.

In a possible implementation of the embodiment of the disclosure, the resource indication information may be used for indicating the number of slots of the target slot, for example, for marking the number of slots of the target slot as N, in which N is a positive integer.

In another possible implementation of the embodiment of the disclosure, the one or more target symbol resources may include one or more time domain symbols, and the resource indication information may be used to indicate the number of symbols in the one or more target symbol resources.

In another possible implementation of the embodiment of the disclosure, the resource indication information may also be used to indicate the number of slots of the target slot, and the number of symbols in the one or more target symbol resources.

In the embodiment of the disclosure, the network device sends the resource indication information of the TB to the terminal device, in which the TB occupies the one or more target symbol resources of at least one target slot. Correspondingly, the terminal device can receive the resource indication information sent by the network device. After receiving the resource indication information, the terminal device can send the above TB according to the resource indication information. In this way, the terminal device can realize transmission of the same TB over multiple slots, which can reduce the coding rate of the TB, and increase the code length of the TB, thereby improving the transmission performance, and achieving the coverage enhancement.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can transmission of the same TB over multiple slots, which can reduce the coding rate of the TB, save the bit overhead for the cyclic redundant check, and increase the code length of the TB, thereby improving the transmission performance, and achieving the coverage enhancement.

To clearly illustrate the above first embodiment, the disclosure also provides a resource indication method. FIG. 5 is a flowchart of a resource indication method according to a second embodiment of the disclosure.

As illustrated in FIG. 5, the resource indication method is applicable to a network device. The method includes the following steps.

At step 201, the network device sends resource indication information of a TB to a terminal device, in which the TB occupies one or more target symbol resources of at least one target slot, the resource indication information includes a first Time Domain Resource Allocation (TDRA) table, the first TDRA table includes at least one PUSCH allocation information element, and the at least one PUSCH allocation information element includes start and length indication information.

It should be noted that the description and illustration of the resource indication information at the preceding step 101 is also applicable to the embodiment and will not be repeated here.

In a possible implementation of the embodiment of the disclosure, the start and length indication information is a Start And Length Indicator Value (SLIV), the SLIV is used to indicate a start symbol position of the first one of the one or more target symbol resources (hereafter refers to as the first target symbol resource) in the first one of the at least one target slot (hereafter refers to as the first target slot), or, to indicate a start symbol position and a symbol length of the target symbol resource in each target slot. The start symbol position refers to a position of the first symbol of the one or more target symbol resources, and the symbol length refers to the number of symbols included in the one or more target symbol resources.

In the embodiment of the disclosure, the network device may send a higher-layer signaling, such as RRC configuration information, to the terminal device. The RRC configuration information may include the first TDRA table. The first TDRA table includes at least one PUSCH allocation information element, and each PUSCH allocation information element includes the start and length indication information. The start and length indication information may be the SLIV, the SLIV is used to indicate the start symbol position of the first target symbol resource in the first target slot (i.e., after determining some symbols indicated by the SLIV, only the start symbol position of these symbols is used as the start symbol position of the first target symbol resource in the first target slot), or, to indicate the start symbol position and the symbol length of the target symbol resource in each target slot.

For example, the network device may configure the first TDRA table for the terminal device via RRC, and a row of the first TDRA table may include a SLIV, i.e., a row of the first TDRA table includes a PUSCH assigned table. Each PUSCH assigned table includes only one PUSCH allocation information element, and the PUSCH allocation information element includes a SLIV, the SLIV corresponds to the start symbol position of the first target symbol resource in the first target slot. Alternatively, the SLIV may correspond to the start symbol position and the symbol length of the target symbol resource in each target slot.

In another possible implementation of the embodiment of the disclosure, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

In the embodiment of the disclosure, the network device may send a higher-layer signaling to the terminal device, such as RRC configuration information. The RRC configuration information may include the first TDRA table. The first TDRA table includes at least one PUSCH allocation information element, and each PUSCH allocation information element includes the start and length indication information. The start and length indication information includes the start symbol indication information S and the symbol length indication information L. The start symbol indication information S is used to indicate the start symbol position of the first target symbol resource in the first target slot, or, to indicate the start symbol position of the target symbol resource in each target slot. The symbol length indication information L is used to indicate the symbol length of the first target symbol resource in the first target slot, or, to indicate the symbol length of the target symbol resource in each target slot.

For example, the network device may configure the first TDRA table for the terminal device via RRC, and a row of the first TDRA table may include a PUSCH assigned table. Each PUSCH assigned table includes only one PUSCH allocation information element, and the PUSCH allocation information element includes separate S and L. S corresponds to the start symbol position of the first target symbol resource in the first target slot, or, S may correspond to the start symbol position of the target symbol resource in each target slot. L corresponds to the symbol length of the first target symbol resource in the first target slot, or, L may correspond to the symbol length of the target symbol resource in each target slot.

In a possible implementation of the embodiment of the disclosure, the resource indication information also includes slot number indication information. The slot number indication information is included in the PUSCH allocation information element, and is used to indicate the number of slots of a target slot corresponding to the PUSCH allocation information element.

In the embodiment of the disclosure, the network device may send a higher-layer signaling to the terminal device, for example, the slot number indication information is added to the first TDRA table in the RRC configuration information. In detail, the slot number indication information may be included in the PUSCH allocation information element.

For example, assuming that the slot number indication information is NofMultiSlotTB, as shown in FIG. 6, the network device can indicate a row in the first TDRA table (such as the first row TDRA1) through a TDRA field in the DCI as the row where the slot number indication information is located. In addition to the SLIV, the PUSCH allocation information element corresponding to the TDRA1 also includes NofMultiSlotTB. It should be noted that when the TDRA field indicates a different row in the first TDRA table, the number N of slots of the target slot indicated by the slot number indication information may be different, because each row in the TDRA table may be configured independently.

For example, in FIG. 6, the PUSCH allocation information element includes the SLIV, which is not limited in the disclosure. The PUSCH allocation information element may not include the SLIV, but includes separate S and L.

In another possible implementation of the embodiment of the disclosure, the resource indication information also includes the slot number indication information. The slot number indication information is not included in the PUSCH allocation information element, and is used to indicate the number of slots of a target slot corresponding to any PUSCH allocation information element.

In the embodiment of the disclosure, the network device may send a high-level signaling to the terminal device. For example, the RRC configuration information may include the slot number indication information. The slot number indication information is not included in the PUSCH allocation information element.

For example, the network device can configure common slot number indication information via RRC. The slot number indication information is used to indicate the number of slots of the target slot corresponding to any PUSCH allocation information element. That is, even if the TDRA field in the DCI indicates a different row in the first TDRA table, the number N of slots of the target slot can still be the same, depending on the common slot number indication information. Compared to the way of including the slot number indication information in the PUSCH allocation information element, configuring the common slot number indication information via RRC can save an indication overhead without a need of configuring multiple rows of the TDRA table separately, but it also reduces configuration flexibility.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. Therefore, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

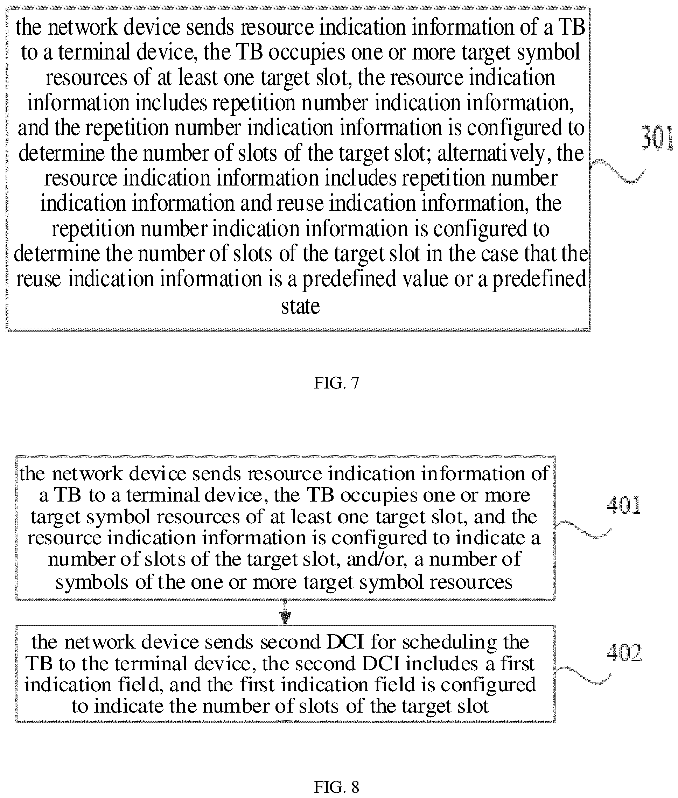

To clearly illustrate the above first embodiment, the disclosure also provides a resource indication method. FIG. 7 is a flowchart of a resource indication method according to a third embodiment of the disclosure.

As illustrated in FIG. 7, the resource indication method is applicable to a network device. The method includes the following steps.

At step 301, the network device sends resource indication information of a TB to a terminal device, in which the TB occupies one or more target symbol resources of at least one target slot, the resource indication information includes repetition number indication information, and the repetition number indication information is used to determine a number of slots of the target slot. Alternatively, the resource indication information includes repetition number indication information and reuse indication information, in which the repetition number indication information is used to determine a number of slots of the target slot in the case that the reuse indication information is a predefined value or a predefined state.

It should be noted that the description and illustration of the resource indication information at the preceding step 101 is also applicable to this embodiment and will not be repeated here.

In a possible implementation of the embodiment of the disclosure, it is possible to reuse the existing "repetition number indication information" to determine the number N of slots of the target slot based on the repetition number indication information. That is, "number Of Repetitions or pusch-Aggregation Factor" in the related art is used to indicate the number N' of repetition transmissions of PUSCH. For example, N' can be 2, 4, 6, 8, 16, etc., and N can be determined based on N'. N' and N have a mapping relation, for example, the mapping relation can be N= N', N=N'/2, or other mapping relations. The mapping relation can be predefined, or configured via RRC, or indicated by DCI, which is not limited in the disclosure.

In another possible implementation of the embodiment of the disclosure, it is possible to reuse the existing "repetition number indication information" to determine the number N of slots of the target slot based on the repetition number indication information and the reuse indication information. In detail, when the reuse indication information is a predefined value or a predefined state, the number of slots of the target slot is determined according to the repetition number indication information.

For example, the network device can configure a RRC parameter for the terminal device to indicate whether to enable a function of "transmitting one TB on multiple PUSCHs". When the function of "transmitting one TB on multiple PUSCHs" is enabled, the above reuse indication information is the predefined value or the predefined state. In this case, the number N of slots of the target slot can be determined according to the repetition number indication information. For example, the repetition number indication information is used to indicate the number N' of repetition transmissions of PUSCH, and there is a mapping relation between N' and N. For example, the mapping relation can be N= N', N=N'/2, or can be other mapping relations, which is not limited by the embodiments of the disclosure. However, when the function of "transmitting one TB on multiple PUSCHs" is not enabled, the above reuse indication information is not the predefined value or the predefined state, and in this case, there is no need to reuse the existing "repetition number indication information".

It should be noted that the above embodiment takes the reuse indication information in the resource indication information as an example. In a practical application, the reuse indication information can also be carried in the DCI for scheduling TB transmission. In detail, the resource indication information may include the repetition number indication information, and the network device may also send first DCI for scheduling the TB to the terminal device. The first DCI includes the reuse indication information. The repetition number indication information is used to determine the number of slots of the target slot under the condition that the reuse indication information is the predefined value or the predefined state. That is, in this disclosure, the existing "repetition number indication information" can be reused to determine the number N of slots of the target slot according to the repetition number indication information and the reuse indication information. In detail, when the reuse indication information is the predefined value or the predefined state, the number N of slots of the target slot is determined according to the repetition number indication information.

For example, whether to reuse or multiplex the existing "repetition number indication information" can be indicated by a 1-bit indication field in the first DCI. For example, when the 1-bit indication field is 0, it indicates that the existing "repetition number indication information" is not reused or multiplexed. When the 1-bit indication field is 1, it indicates that the existing "repetition number indication information" is reused or multiplexed. When the first DCI indicates to reuse or multiplex the existing "repetition number indication information", in this case, the reuse indication information is the predefined value or the predefined state, and the number N of slots of the target slot can be determined according to the repetition number indication information. For example, the repetition number indication information indicates the number N' of repetition transmissions of PUSCH, and there is a mapping relation between N' and N. For example, the mapping relation can be N= N', N=N'/2, or other mapping relations, which is not limited in the embodiments of this disclosure.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

To clearly illustrate any of the above embodiments, the disclosure also provides a resource indication method. FIG. 8 is a flowchart of a resource indication method according to a fourth embodiment of the disclosure.

As illustrated in FIG. 8, the resource indication method is applicable to a network device. The method includes the following steps.

At step 401, the network device sends resource indication information of a TB to a terminal device, in which the TB occupies one or more target symbol resources of at least one target slot, and the resource indication information is used to indicate a number of slots of the target slot, and/or, is used to indicate a number of symbols of the one or more target symbol resources.

In the embodiment of the disclosure, step 401 may be implemented according to any of implementations of the embodiments of the disclosure, respectively, which is not limited in the embodiments of the disclosure and will not be repeated.

At step 402, the network device sends second DCI for scheduling the TB to the terminal device, the second DCI includes a first indication field, and the first indication field is used to indicate the number of slots of the target slot.

In the embodiment of the disclosure, the network device sends the second DCI for scheduling the TB to the terminal device. The second DCI may include the first indication field, and the first indication field may be used to indicate the number N of slots of the target slot. The number of slots indicated by the first indication field is determined based on the number of slots indicated by the resource indication information.

For example, a new Q-bit indication field can be added to the second DCI, and different states of the above Q bits are used to indicate different values of N, respectively. The values of N corresponding to the different states of the Q bits can be predefined or can also be configured via RRC.

For another example, Q bits in other fields in the second DCI can be multiplexed, for example, the second bit to the $(Q+1)^{th}$ bit of the time domain resource allocation field can be multiplexed. Different states of the above Q bits correspond to different values of N, respectively. The values of N corresponding to the different states of the Q bits can be predefined or can also be configured via RRC.

It should be noted that the above method of configuring different values of N via RRC may including configuring a new cell for the terminal device, or reusing the existing cell (e.g., repetition number indication information). The method for configuring the new cell may be, for example, configuring a new cell NofMultiSlotTB = { 1, 2, 4, 8} via RRC, in which the four states {00, 01, 10, 11} of Q=2 bits in the second DCI correspond to N=1, 2, 4, 8, respectively. Or the method for configuring the new cell may be configuring a new cell NofMultiSlotTB = Ns via RRC, in which the four states {00, 01, 10, 11} of Q=2 bits in the second DCI correspond to N= Ns/1, Ns/2, Ns/4, Ns/8, respectively. The method of reusing the cell may be, for example, reusing the value N'=16 indicated by the number Of Repetitions, in which the two states {0, 1} of Q=1 bit in the second DCI correspond to N=1 or N=N'=16, respectively, or similarly, the four states {00, 01, 10, 11} of Q=2 bits correspond to N=1, N=N'/8=2, N=N'/4=4, N=N'/2=8, respectively. The correspondence between the set of N and the set of N' can be configured or can be predefined.

It should be noted that in the above example, step 402 is executed after step 401. In a practical application, the disclosure does not limit the timing of execution of steps 401 and 402. For example, step 402 may also be executed before step 401 or, step 402 may also be executed in parallel with step 401.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, and increase the code length of the TB, thereby improving the transmission performance, and achieving the coverage enhancement.

The above second embodiment to the fourth embodiment are described in detail below in combination with embodiment A.

The network device indicates the PUSCH resource to the terminal device, and the terminal device transmits one TB on the PUSCH resource. The PUSCH resource includes N PUSCH resources, the N PUSCH resources are included in M slots, each PUSCH resource is included in at most 1 slot, where $N \geq M > 1$; or equivalently, the PUSCH resource includes one PUSCH resource, the one PUSCH resource includes N portions, the N portions are included in M slots, where $N \geq M > 1$. One TB as described above includes N portions that are transmitted on the N PUSCHs respectively, or equivalently, one TB includes N portions that are transmitted on N portions of one PUSCH respectively.

Embodiment A specifically introduces two transmission modes for transmitting one TB on N PUSCHs (or equivalently, N portions of one PUSCH). The method for indicating the PUSCH resource includes indicating the number of PUSCHs (or equivalently, the number of multiple portions of one PUSCH) or the number N of slots occupied by the TB.

In the embodiment of the disclosure, "transmitting one TB on N PUSCHs, in which each PUSCH is included in only one slot, and the N PUSCHs are included in a total of M slots" and "transmitting one TB on one PUSCH, in which the N portions included in the PUSCH resource are included in M slots" are equivalent, and the essence is the same. The two transmitting methods are essentially transmitting a TB after channel encoding on the resource consisting of multiple slots. The difference is only in that in the former method, one PUSCH is included in only one slot, while in the latter method, one PUSCH is included in multiple slots. Therefore, the following is described only in terms of "transmitting one TB on N PUSCHs", but it should be noted that it is also equivalent to "transmitting one TB on one PUSCH, in which N portions included in the PUSCH resource are included in M slots".

One TB usually refers to a TB before unified channel coding, and a TB after unified channel coding becomes a CB. Moreover, "transmitting one TB on multiple PUSCHs" refers to one TB after unified channel coding (i.e., CB) is sent from the terminal device to the network device by carrying several portions of the CB respectively on multiple PUSCHs. Since transmitting the CB is still essentially sending information of the TB to the network device, in this disclosure, unless otherwise specified, sending the TB and transmitting the TB are not distinguished from sending the CB and transmitting the CB.

The transmission modes may include Type A and Type B.

Type A refers to transmitting one TB on N PUSCHs, in which these N PUSCHs are transmitted in N slots, and the time domain symbols occupied by the PUSCH resources in respective slots are the same.

That is, Type A in the above transmission mode specifically means that each target slot includes one target symbol resource (i.e., PUSCH resource), and target symbol resources in respective target slots have the same start symbol position and the same symbol length.

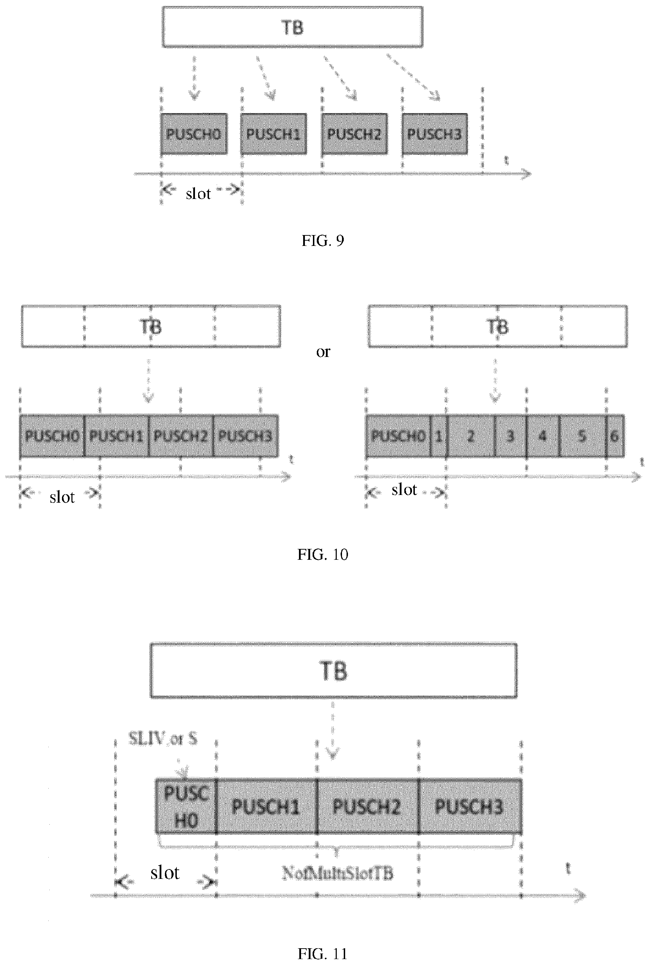

As illustrated in FIG. 9, one TB can be transmitted on four PUSCHs (PUSCHs 0~3), the four PUSCHs are in four slots, and the time domain symbols occupied by the PUSCH resources in respective slots are the same.

Type B refers to transmitting one TB on N PUSCHs, in which the N PUSCH resources are adjacent to each other on the available symbols in the time domain.

That is, Type B in the above transmission mode specifically means that in the target symbol resources occupied by the TB, symbols occupied by adjacent target symbol resources are adjacent, or, adjacent target symbol resources are separated by an unavailable symbol (such as downlink symbol) and not separated by an available symbol (such as uplink symbol).

As illustrated in FIG. 10, one TB is transmitted on four nominal PUSCHs (or 6 actual PUSCHs), the resources of which are adjacent to each other in the time domain. In FIG. 10, for example, all time domain resources are represented by available symbols.

In addition, there can be other transmission modes, for example, transmitting time-domain symbols carrying the same TB in multiple slots based on other rules, which are not limited in the disclosure.

The method for indicating PUSCH resources includes indicating the number of PUSCHs (or equivalently, the number of multiple portions of one PUSCH) or the number N of slots occupied by the TB.

In the NR system, in the normal case, i.e., the case of "transmission not on multiple PUSCHs (different TBs)", the method for indicating PUSCH resources sent by the network device to the terminal device in a dynamic scheduling manner can be summarized as follows.

A TDRA table is configured for the terminal device via RRC, in which each row in the TDRA table includes a SLIV. In detail, a row in the TDRA table includes a PUSCH assigned table which includes only one PUSCH allocation information element, the PUSCH allocation information element includes a SLIV, the SLIV corresponds to specific start position information and length information, or, instead of SLIV, the PUSCH allocation information element includes separate start symbol indication information S and symbol length indication information L.

In the embodiment of the disclosure, based on the related art, the PUSCH resources may be indicated by indicating the number N of the multiple PUSCHs on which one TB is transmitted (or the number of slots of the resources occupied by the TB) N, in which:

1. N may be indicated through RRC configuration

In the first way, new PUSCH number indication information (noted in this disclosure as the slot number indication information) is added to each row (e.g., in the PUSCH allocation information element) in the TDRA table configured via RRC to indicate how many PUSCHs on which a TB can be transmitted (for the Type B, it indicates the number of nominal PUSCHs), or how many slots in which one TB can be transmitted, i.e., N. When the TDRA field in the DCI indicates a different row in the TDRA table, the corresponding value N can be different, because each row in the TDRA can be configured independently. That is, in this disclosure, the number of slots of the target slot can be determined by the slot number indication information together with the indication field of the DCI.

In the second way, common PUSCH number indication information (noted in this disclosure as the slot number indication information) is configured via RRC to indicate N. Even if the TDRA field in the DCI indicate different rows in the TDRA table, N remains the same, depending on the common PUSCH number indication information. Compared to the first way, this way saves the indication overhead without the need to configure multiple rows in the TDRA table separately, but it also reduces the configuration flexibility.

In the third way, the existing repetition number indication information is reused to indicate N. In the related art, the repetition number indication information (number Of Repetitions or pusch-Aggregation Factor) indicates the number of repetition transmissions of PUSCH, e.g., 2, 4, 8, 16, etc. For example, the network device can configure a RRC parameter for the terminal device to indicate whether to enable the function of "transmitting one TB on multiple PUSCHs". If the function is enabled, the terminal device may determine the number N of the multiple PUSCHs by on which one TB is transmitted based on the number N' of repetition transmissions of PUSCH, such as N=N', or some other relations such as N=N'/2. Alternatively, the network device may send the DCI for scheduling the TB to the terminal device, in which the 1-bit information in the DCI indicates whether to multiplex the repetition number indication information, and if so, the terminal device may determine the number N of the multiple PUSCHs on which one TB is transmitted based on the number N' of repetition transmissions of PUSCH, such as N=N', or some other relations such as N=N'/2.

2. N can also be indicated via DCI

In the first way, a new Q-bit indication field is added to the DCI, and different states of these Q bits are used to indicate different values of N, respectively. The values of N corresponding to the different states of Q bits can be predefined or can also be configured via RRC.

In the second way, Q bits in other fields in the DCI are multiplexed, such as the second bit to the $(Q+1)^{th}$ bit of the time domain resource allocation field, and different states of these Q bits correspond to different values of N, respectively. The values of N corresponding to different states of the Q bits can be predefined or can also be configured via RRC.

The method of configuring different values of N via RRC in the first way and the second way may include configuring a new cell for the terminal device or reusing the existing cell, such as the repetition number indication information. The method for configuring the new cell may be, for example, configuring a new cell NofMultiSlotTB = { 1, 2, 4, 8} via RRC, in which the four states {00, 01, 10, 11} of Q=2 bits in the DCI correspond to N=1, 2, 4, 8, respectively. Or the method for configuring the new cell may be configuring a new cell NofMultiSlotTB = Ns via RRC, where Ns is a positive integer, in which the four states {00, 01, 10, 11} of Q=2 bits in the second DCI correspond to N= Ns/1, Ns/2, Ns/4, Ns/8, respectively. The method of reusing the cell may be, for example, reusing the value N'=16 indicated by the number Of Repetitions, in which the two states {0, 1} of Q=1 bit in the DCI correspond to N=1 or N=N'=16, respectively, or similarly, the four states {00, 01, 10, 11} of Q=2 bit values correspond to N=1, N=N'/8=2, N=N'/4=4, N=N'/2=8, respectively. The correspondence between the set of N and the set of N' can be configured or can be predefined.

The method of indicating the PUSCH resource in Embodiment A is applicable for both the Type A and the Type B. For the type A, since the number of slots and the number of PUSCHs are always the same, the value indicated by NofMultiSlotTB (or reusing the value indicated by the number Of Repetitions) can indicate both the number of slots and the number of PUSCHs, which are equivalent. For the Type B, the number of slots and the number of PUSCHs may be different, and depending on how NofMultiSlotTB indicates the PUSCH resource used to transmit the TB, the Type B can be divided as follows:

Type B-1: NofMultiSlotTB indicates the number of (nominal) PUSCHs. In this case, the PUSCH resource used by the TB can be determined in the same way as described in FIG. 10.

Type B-2: NofMultiSlotTB indicates the number of slots. In this case, the resource for transmitting the TB is included in the N slots, the start position of the resource in the first slot is determined according to the SLIV or according to the separate S, and then from that position, the symbols in the subsequent N slots are used for transmitting this TB, as shown in FIG. 11.

The number N of multiple PUSCHs on which one TB is transmitted can be indicated directly by RRC configuration and/or DCI, so that the indication of multiple PUSCH resources used to carry the same TB can be realized.

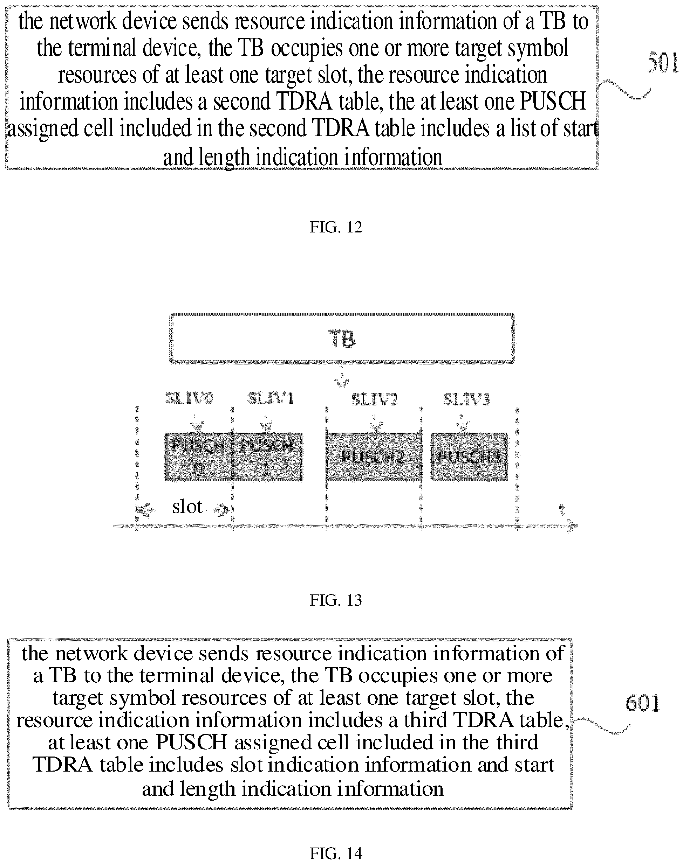

To clearly illustrate the above first embodiment, the disclosure also provides a resource indication method. FIG. 12 is a flowchart of a resource indication method according to a fifth embodiment of the disclosure.

As illustrated in FIG. 12, the resource indication method is applicable to a network device. The method includes the following steps.

At step 501, the network device sends resource indication information of a TB to the terminal device, in which the TB occupies one or more target symbol resources of at least one target slot, the resource indication information includes a second TDRA table, and at least one PUSCH allocation information element included in the second TDRA table includes a list of start and length indication information.

It should be noted that the description and illustration of the resource indication information at the preceding step 101 is also applicable to this embodiment and will not be repeated here.

In the embodiment of the disclosure, the list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate a start symbol position and a symbol length of the target symbol resource in each target slot.

The start and length indication information in the valid state means that the value of the start and length indication information is within a preset range. For example, when the start and length indication information is a SLIV, and the SLIV is represented by 7 bits, if the value of SLIV is between 0 and 104, it is determined that the start and length indication information is in the valid state, while if the value of SLIV is greater than or equal to 105, it is determined that the start and length indication information is in an invalid state.

In the embodiment of the disclosure, the network device may send a higher-layer signaling to the terminal device, such as RRC configuration information. The RRC configuration information may include the second TDRA table. The second TDRA table may include at least one PUSCH allocation information element, and each PUSCH allocation information element may include the list of start and length indication information. When the start and length indication information in the list of start and length indication information is in an invalid state, the indication of the start and length indication information is determined to be invalid. When at least one piece of start and length indication information in the list of start and length indication information is in the valid state, the number of slots of the target slot can be determined based on the number of pieces of start and length indication information in the valid state in the list of start and length indication information. The number of slots of the target slot is equal to the number of pieces of start and length indication information in the valid state. Moreover, the start symbol position and the symbol length of the target symbol resource in each corresponding target slot can be determined based on each piece of start and length indication information in the valid state in the list of start and length indication information.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

The above fifth embodiment is described in detail below in combination with embodiment B.

Referring to the contents shown in embodiment A above, each PUSCH allocation information element includes only one SLIV. In the embodiment B, each PUSCH allocation information element includes a list of SLIVs (or a separate list of S and a separate list of L, the list of SLIVs is used as an example below). The length of the SLIV in a valid state in the list of SLIVs is the number N of consecutive PUSCHs. Each SLIV in the list of SLIVs corresponds to the start symbol position and the number of symbols (i.e., symbol length) of each PUSCH resource. For example, the $i^{th}$ SLIV in the list of SLIVs corresponds to the $i^{th}$ PUSCH (or the $i^{th}$ portion of one PUSCH). According to a predefined mapping relation, different SLIVs correspond to start symbol positions and/or symbol lengths of different PUSCHs.

As illustrated in FIG. 13, the list of SLIVs includes four SLIVs (SLIV 0~3), and the four SLIVs correspond to the start symbol positions and symbol lengths of four consecutive PUSCHs.

The embodiment B is applicable to both the Type A and the Type B (the PUSCH resources are adjacent to each other on the available symbols in the time domain). The remaining content no described here is the same as the embodiment A.

To clearly illustrate the above first embodiment, the disclosure also provides a resource indication method. FIG. 14 is a flowchart of a resource indication method according to a sixth embodiment of the disclosure.

As illustrated in FIG. 14, the resource indication method is applicable to a network device. The method includes the following steps.

At step 601, the network device sends resource indication information of a TB to the terminal device, in which the TB occupies one or more target symbol resources of at least one target slot, the resource indication information includes a third TDRA table, the third TDRA table includes at least one PUSCH allocation information element, and the at least one PUSCH allocation information element includes slot indication information and start and length indication information.

It should be noted that the description and illustration of the resource indication information at the preceding step 101 is also applicable to this embodiment and will not be repeated here.

In the embodiment of the disclosure, the network device may send a higher-layer signaling to the terminal device, such as RRC configuration information. The RRC configuration information may include the third TDRA table, the third TDRA table may include at least one PUSCH allocation information element, and each PUSCH allocation information element may include the slot indication information and the start and length indication information.

The slot indication information is used to indicate the start slot position and the number of slots of multiple target slots.

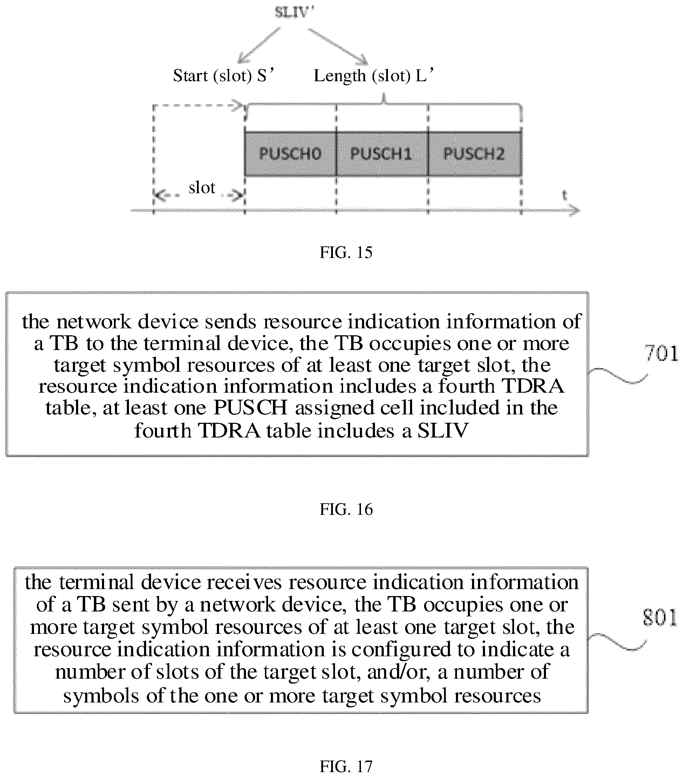

For example, as illustrated in FIG. 15, the slot indication information is labeled as SLIV', which can be used to indicate the start slot position S' and the number L' of slots of multiple target slots. The relation of SLIV', the start slot location S' and the length (number of slots) L' can be represented as follows:

$$SLIV' = \begin{cases} M \cdot (L'-1) + S', L'-1 \le \left\lfloor \dfrac{M}{2} \right\rfloor \\ M \cdot (M - L' + 1) + (M - 1 - S'), \text{other} \end{cases} ; (1)$$

where $0 < L' \le M-S'$, M is the maximum number of allocated slots, for example, the value of M can be 4, 6, 8, 10, and 16, etc. S' is the start point at slot-level granularity, i.e., the start slot position of the multiple target slots. L' is the continuous length at slot-level granularity, i.e., the number of slots of the multiple target slots.

The start and length indication information is used to indicate the start symbol position of the first target symbol resource in the first target slot, or, to indicate the start symbol position and the symbol length of the target symbol resource in each target slot.

For example, when the start and length indication information is a SLIV, the SLIV is used to indicate the start symbol position of the first target symbol resource in the first target slot, or, the SLIV is used to indicate the start symbol position and the symbol length of each target symbol resource in each target slot. When the start and length indication information includes the start symbol indication information S and the symbol length indication information L, the start symbol indication information S is used to indicate the start symbol position of the first target symbol resource in the first target slot, or, is used to indicate the start symbol position of the target symbol resource in each target slot, and the symbol length indication information L is used to indicate the symbol length of the first target symbol resource in the first target slot, or, to indicate the symbol length of the target symbol resource in each target slot.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

To clearly illustrate the above first embodiment, the disclosure also provides a resource indication method. FIG. 16 is a flowchart of a resource indication method according to a seventh embodiment of the disclosure.

As illustrated in FIG. 16, the resource indication method is applicable to a network device. The method includes the following steps.

At step 701, the network device sends resource indication information of a TB to the terminal device, in which the TB occupies one or more target symbol resources of at least one target slot, the resource indication information includes a fourth TDRA table, the fourth TDRA table includes at least one PUSCH allocation information element, and the at least one PUSCH allocation information element includes a SLIV.

It should be noted that the description and illustration of the resource indication information at the preceding step 101 is also applicable to this embodiment and will not be repeated here.

In the embodiment of the disclosure, the network device may send a higher-layer signaling to the terminal device, such as RRC configuration information. The RRC configuration information may include the fourth TDRA table, the fourth TDRA table may include at least one PUSCH allocation information element, and each PUSCH allocation information element may include the SLIV. In the case where the SLIV falls into a first interval, the PUSCH allocation information element corresponds to one target slot, and the SLIV is used to indicate a start symbol position and a symbol length of one or more target symbol resources in the target slot. Alternatively, in the case where the SLIV falls into a second interval, the PUSCH allocation information element corresponds to multiple target slots, and the SLIV is used to indicate a start slot position and a slot length (i.e., the number of slots of the target slots) of the multiple target slots. The first interval and the second interval have no intersection.

The first interval and the second interval are pre-set different intervals, and the first interval and the second interval have no intersection.

For example, when the SLIV is represented by 7 bits, the first interval can be between 0 and 104, and the second interval can be between 105 and 127. If the value of SLIV is between 0 and 104, the allocated symbols in one target slot are determined according to the SLIV, and the TB is transmitted in only one target slot, i.e., the PUSCH allocation information element corresponds to one target slot, and the SLIV is used to indicate the start symbol position and the symbol length of the one or more target symbol resources in the above-mentioned one target slot. If the value of SLIV is between 105 and 127, a SLIV' can be determined according to the SLIV, and the start slot position S' and the number L' of slots (i.e., slot length) of the multiple target slots can be determined according to equation (1) in the above-described embodiment, i.e., the PUSCH allocation information element corresponds to the multiple target slots, and the SLIV is used to indicate the start slot position and the slot length of the multiple target slots.

According to the resource indication method of the embodiment of the disclosure, the network device sends the resource indication information of the TB to the terminal device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

The embodiment 6 and the embodiment 7 are described in detail below in combination with embodiment C.

Referring to the contents shown in the embodiment A above, the SLIV in each PUSCH allocation information element is the SLIV at symbol-level granularity in a slot, while in the embodiment C, the SLIV can be indicated at "symbol group"-level granularity (labeled as SLIV'), and the SLIV' is used to indicate multiple PUSCH resources/slot resources. In some embodiments, one slot is one "symbol group". Similar to the relation between the SLIV and the symbol-level time domain start point and length, the SLIV' indicates the slot-level time domain start point and length. It should be noted that "symbol groups" of other lengths are possible, for example, 7 consecutive symbols with the normal cyclic prefix are regarded as one symbol group.

The relation between the SLIV' and the start slot position S' and the slot length L' (i.e., the number of slots) can be shown in the equation (1) above.

It should be noted that it is possible to use the newly introduced SLIV' together with the existing SLIV in the disclosure. For example, from the terminal device's perspective, when both the SLIV' and the SLIV are included in the PUSCH allocation information element, the SLIV' and the SLIV can be determined separately. The SLIV' is used to determine the slots where multiple PUSCHs are located, and the SLIV is used to determine the symbols assigned in each slot. When the PUSCH allocation information element includes only the SLIV', the SLIV' can be determined and the SLIV' is used to determine the slots where multiple PUSCHs are located, and the allocated symbols in each slot can be predefined, e.g., it is predefined that all symbols in the slot are allocated (i.e., which is the case described in FIG. 15 above). When the PUSCH allocation information element includes only the SLIV, the allocation of resources is determined according to a specific value of the SLIV, and there may be two following subdivision solutions:

> 1. when the value of the SLIV ranges from 0 to 104, it is determined that the TB is transmitted in only one slot and the allocated symbols in one slot are determined according to the SLIV; and
> 2. when the value of the SLIV is greater than or equal to 105, it is determined that the TB is transmitted in multiple slots and the SLIV' is determined according to the value of the SLIV. For example, if SLIV' = SLIV-105, and the slots where multiple PUSCHs are located are determined according to the above relation of SLIV', S' and L' (i.e., equation (1)), and the allocated symbols in each slot are determined according to a predefined rule.

In the second subdivision solution, in the related art, the SLIV is represented by 7 bits, but only 105 states (0 to 104) of the 128 states (0 to127) of the 7 bits are used to indicate the allocated symbols in one slot, and the remaining 23 states (105 to 127) are not used. Therefore, the remaining unused states can be utilized, and the slots where multiple PUSCHs are located can be determined based on these remaining states. It is considered that in the solution, when the network device configures the function of "transmitting one TB on multiple PUSCHs" for the terminal device, and the PUSCH allocation information element indicated by the DCI does not include the SLIV' but only includes the SLIV, depending on the specific value of the SLIV, it is determined to "transmit one TB on only one PUSCH" and the symbol-level resource allocation is determined, or, it is determined to "transmit one TB on multiple PUSCHs" and the slot-level resource allocation is determined. That is, it can be determined whether the resource allocation is the symbol-level resource allocation (0 to 104) or the slot-level resource allocation (105 to 127) depending on the value range of the SLIV.

The embodiment C is applicable to both the Type A and the Type B (the PUSCH resources are adjacent to each other on the available symbols in the time domain). The remaining content not described here is the same as the embodiment A.

The above describes the resource indication method performed by a network device, and the disclosure also proposes a resource indication method performed by a terminal device.

FIG. 17 is a flowchart of a resource indication method according to an eighth embodiment of the disclosure.

An execution subject of the embodiments of the disclosure is a resource indication apparatus provided in the disclosure, which can be configured in any terminal device, to enable the terminal device to perform a resource indication function.

As shown in FIG. 17, the resource indication method is applicable to a terminal device. The method may include the following steps.

At step 801, the terminal device receives resource indication information of a TB sent by a network device, in which the TB occupies one or more target symbol resources of at least one target slot, the resource indication information is used to indicate a number of slots of the target slot, and/or, is used to indicate a number of symbols of the one or more target symbol resources.

In the embodiment of the disclosure, the target symbol resource is a symbol resource or a time domain resource occupied by the TB in the target slot.

In a possible implementation of the embodiment of the disclosure, the resource indication information may be used for indicating the number of slots of the target slot, for example, for marking the number of slots of the target slot as N, in which N is a positive integer.

In another possible implementation of the embodiment of the disclosure, the one or more target symbol resources may include one or more time domain symbols, and the resource indication information may be used to indicate the number of symbols in the one or more target symbol resources.

In another possible implementation of the embodiment of the disclosure, the resource indication information may also be used to indicate the number of slots of the target slot, and the number of symbols in the one or more target symbol resources.

In the embodiment of the disclosure, the network device sends the resource indication information of the TB to the terminal device, in which the TB occupies the one or more target symbol resources of at least one target slot. Correspondingly, the terminal device can receive the resource indication information sent by the network device. After receiving the resource indication information, the terminal device can send the above TB according to the resource indication information. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

In another possible implementation of the embodiment of the disclosure, the resource indication information may include a first TDRA table. The first TDRA table includes at least one PUSCH allocation information element, and each PUSCH allocation information element includes start and length indication information. The start and length indication information is a SLIV. The SLIV is used to indicate a start symbol position of the first one of the one or more target symbol resources (hereafter refers to as the first target symbol resource) in the first one of the at least one target slot (hereafter refers to as the first target slot), or, to indicate a start symbol position and a symbol length of the target symbol resource in each target slot. Alternatively, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

In a possible implementation of the embodiment of the disclosure, the resource indication information includes slot number indication information. The slot number indication information is included in the PUSCH allocation information element, and is used to indicate the number of slots of a target slot corresponding to the PUSCH allocation information element. Alternatively, the slot number indication information is not included in the PUSCH allocation information element, and is used to indicate the number of slots of a target slot corresponding to any PUSCH allocation information element.

In a possible implementation of the embodiment of the disclosure, the resource indication information includes repetition number indication information. The repetition number indication information is used to determine the number of slots of the target slot. Alternatively, the resource indication information includes repetition number indication information and reuse indication information, in which the repetition number indication information is used to determine the number of slots of the target slot in the case that the reuse indication information is a predefined value or a predefined state.

In a possible implementation of the embodiment of the disclosure, the resource indication information includes the repetition number indication information. The terminal device may also receive first DCI for scheduling the TB sent by the network device, the first DCI includes the reuse indication information. The repetition number indication information is used to determine the number of slots of the target slot if the reuse indication information is a predefined value or a predefined state.

In a possible implementation of the embodiment of the disclosure, the terminal device may also receive second DCI for scheduling the TB sent by the network device, the second DCI includes a first indication field. The first indication field is used to indicate the number of slots of the target slot, in which the number of slots indicated by the first indication field is determined based on the number of slots indicated by the resource indication information.

In a possible implementation of the embodiments of the disclosure, the resource indication information includes a second TDRA table. The second TDRA table includes at least one PUSCH allocation information element, the at least one PUSCH allocation information element includes a list of start and length indication information. The list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate the start symbol position and the symbol length of the target symbol resource in each target slot.

In a possible implementation of the embodiment of the disclosure, the resource indication information includes a third TDRA table. The third TDRA table includes at least one PUSCH allocation information element, the at least one PUSCH allocation information element includes slot indication information and start and length indication information. The slot indication information is used to indicate a start slot position and a number of slots of a plurality of the target slots. The start and length indication information is used to indicate the start symbol position of the first target symbol resource in the first target slot, or, to indicate the start symbol position and the symbol length of the target symbol resource in each target slot.

In a possible implementation of the embodiment of the disclosure, the resource indication information includes a fourth TDRA table. The fourth TDRA table includes at least one PUSCH allocation information element, the at least one PUSCH allocation information element includes a SLIV. In response to the SLIV falling within a first interval, the PUSCH allocation information element corresponds to one target slot, and the SLIV is used to indicate the start symbol position and the symbol length of the one or more target symbol resources in the target slot. Alternatively, in response to the SLIV falling within a second interval, the PUSCH allocation information element corresponds to a plurality of target slots, and the SLIV is used to indicate a start slot position and a slot length of the plurality of target slots. The first interval and the second interval have no intersection.

In a possible implementation of the embodiment of the disclosure, each target slot includes one target symbol resource, and target symbol resources in respective target slots have the same start symbol position and the same symbol length.

In a possible implementation of the embodiment of the disclosure, in the one or more target symbol resources occupied by the TB, symbols occupied by the adjacent target symbol resources are adjacent to each other, or, adjacent target symbol resources are separated by an unavailable symbol and are not separated by an available symbol.

It should be noted that, for those skilled in the art, the explanatory description and technical details of the resource indication method performed by the network device in any of the preceding embodiments described with reference to FIGS. 3 to 16 are also applicable to the terminal device described above, which is implemented based on similar principles, and will not be repeated here.

According to the resource indication method of the embodiment of the disclosure, the terminal device receives the resource indication information of the TB sent by the network device, in which the TB occupies the one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement.

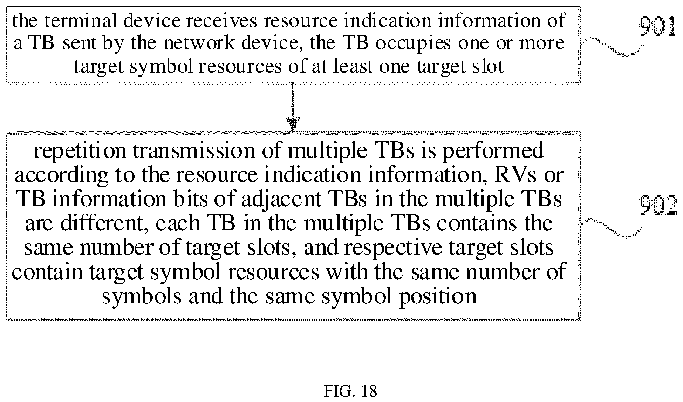

To clearly illustrate any of the above embodiments, the disclosure also provides a resource indication method. FIG. 18 is a flowchart of a resource indication method according to a ninth embodiment of the disclosure.

As illustrated in FIG. 18, the resource indication method is applicable to a terminal device. The method includes the following steps.

At step 901, the terminal device receives resource indication information of a TB sent by a network device, in which the TB occupies one or more target symbol resources of at least one target slot.

The resource indication information is used to indicate a number of slots of the target slot, and/or, is used to indicate a number of symbols of the one or more target symbol resources.

In the embodiments of the disclosure, step 901 may be implemented according to any of implementations of the embodiments of the disclosure, which is not limited in the embodiments of the disclosure and will not be repeated.

At step 902, repetition transmission of multiple TBs is performed according to the resource indication information, in which RVs or TB information bits of adjacent TBs in the above multiple TBs are different, the multiple TBs occupy different time periods, the time period contains multiple target slots, and target symbol resources in different time periods are the same.

In the embodiment of the disclosure, to further achieve the coverage enhancement, the feature of transmitting one TB over multiple slots can be used in combination with the existing repetition transmission feature. In detail, after the terminal device receives the resource indication information, repetition transmission of the TBs is performed based on the resource indication information.

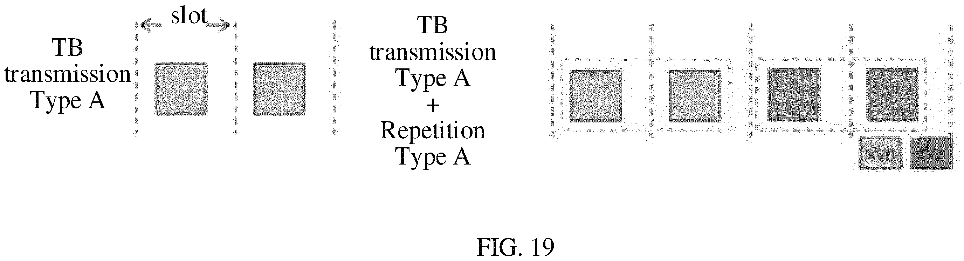

For example, the feature of transmitting one TB over multiple slots can be used in combination with the existing repetition Type A. For example, the entire N PUSCHs (noted in this disclosure as the target symbol resources of the N target slots) that "carry the same TB" in the TB transmission Type A are regarded as a unit that needs to be repeated, repetition is performed for K times in the time domain according to the rule of the repetition Type A. In this case, there are N*K PUSCHs transmitted in N*K slots, each slot contains one PUSCH. Each of the K repetitions (i.e., K time periods) contains the same time domain resources occupied by the N PUSCHs, and the allocated symbols in each slot are the same. The N PUSCHs in each repetition collectively carry one TB, and the RVs of different repetition units can be different, for example, they can be cyclic in a predefined order. Alternatively, the RVs of different repetition units can be the same. FIG. 19 is an example of TB transmission Type A in combination with repetition Type A according to an embodiment of the disclosure. FIG. 19 shows an example, in which the RVs of different repetitions are different, and the RV is repeated in the order of 0-2-3-1.

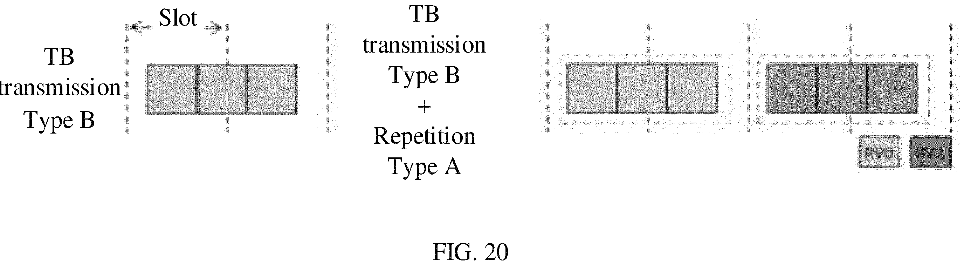

For example, the feature of transmitting one TB over multiple slots can be used in combination with the existing repetition Type A. For example, the entire N PUSCHs that "carry the same TB" in the TB transmission Type A are regarded as a unit that needs to be repeated, and repetition is performed for K times in the time domain according to the rule of the repetition Type A. In this case, there are N*K PUSCHs transmitted in M*K slots, and each slot contains N PUSCHs. The time domain resources occupied by the N PUSCHs included in each of the K repetitions are the same and adjacent to each other. The N PUSCHs in each repetition collectively carry one TB. Similarly, the RVs can be different or the same for different repetition units. FIG. 20 is an example of TB transmission Type B in combination with repetition Type A according to an embodiment of the disclosure.

According to the resource indication method of the embodiment of the disclosure, the terminal device receives the resource indication information of the TB sent by the network device, in which the TB occupies one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement. Repetition transmission of the multiple TBs is performed according to the resource indication information, in which RVs or TB information bits of adjacent TBs in the multiple TBs are different, the multiple TBs occupy different time periods, the time period contains multiple target slots, and target symbol resources in different time periods are the same. In this way, the further coverage enhancement can be achieved.

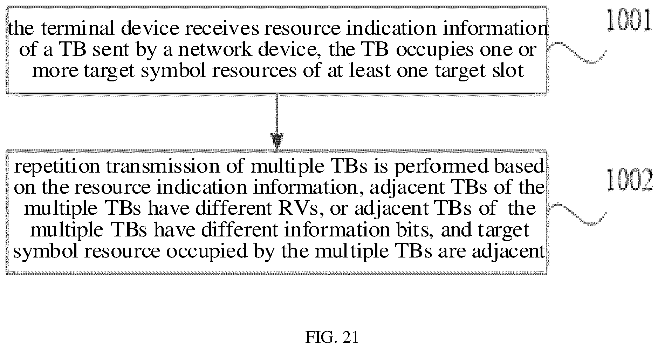

To clearly illustrate any of the above embodiments, the disclosure also provides a resource indication method. FIG. 21 is a flowchart of a resource indication method according to a tenth embodiment of the disclosure.

As illustrated in FIG. 21, the resource indication method includes the following steps.

At step 1001, the terminal device receives resource indication information of a TB sent by a network device, in which the TB occupies one or more target symbol resources of at least one target slot.

The resource indication information is used to indicate a number of slots of the target slot, and/or, is used to indicate a number of symbols of the one or more target symbol resources.

In the embodiment of the disclosure, step 1001 may be implemented according to any of implementations of the embodiments of the disclosure, respectively, which is no limited in the embodiments of the disclosure and is not repeated.

At step 1002, repetition transmission of multiple TBs is performed according to the resource indication information, in which RVs or TB information bits of adjacent TBs in the multiple TBs are different, and the target symbol resources occupied by the multiple TBs are adjacent to each other.

In the embodiment of the disclosure, to further achieve the coverage enhancement, the feature of transmitting one TB over multiple slots can be used in combination with the existing repetition transmission feature. In detail, after the terminal device receives the resource indication information, repetition transmission of the multiple TBs is performed based on the resource indication information.

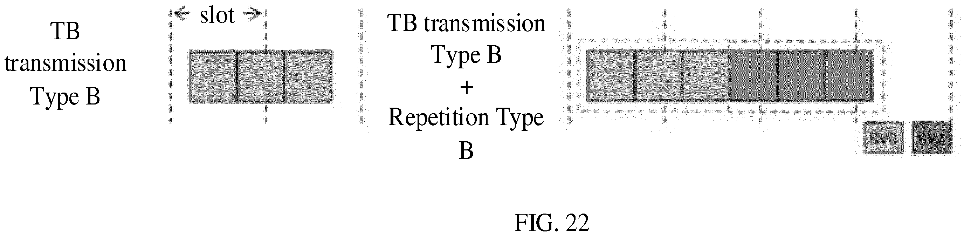

For example, the feature of transmitting one TB over multiple slots can be used in combination with the existing repetition Type B. For example, the entire N PUSCHs (noted in the disclosure as the target symbol resources of the N target slots) that "carry the same TB" in the TB transmission Type B are regarded as a unit that needs to be repeated, and repetition is performed for K times in the time domain according to the rule of the repetition Type B. In this case, N*K PUSCHs are transmitted, and these PUSCHs are adjacent to each other in the time domain. The N PUSCHs in each repetition collectively carry one TB. Similarly, the RVs of different repetition units can be different or the same. FIG. 22 is an example of TB transmission Type B in combination with repetition Type B according to an embodiment of the disclosure.

It should be noted that, considering that it may be difficult for the terminal device to send 2 different TBs or different RVs of the same TB in one slot, step 1002 can be further processed and optimized as follows: when "multiple PUSCHs carrying the same TB" is followed by further "multiple PUSCHs carrying the same TB", if both parts are in the same slot, the time domain resource of the former part is extended to the last available symbol of the slot where it is located, while the next part is delayed and started from the first available symbol of the next slot as.

In detail, the target symbol resources of the multiple TBs are determined based on the resource indication information. If the target symbol resources corresponding to two TBs are included in one slot, the end position of the target symbol resource of the former TB is extended to the last symbol in the slot, and the start position of the target symbol resource of the latter TB is delayed to the first symbol in the next slot after the slot. Further, according to the number of symbols delayed at the start position of the latter TB, the end position of the target symbol resource occupied by the latter TB can be delayed correspondingly, and repetition transmission of the multiple TBs is performed according to the adjusted target symbol resources.

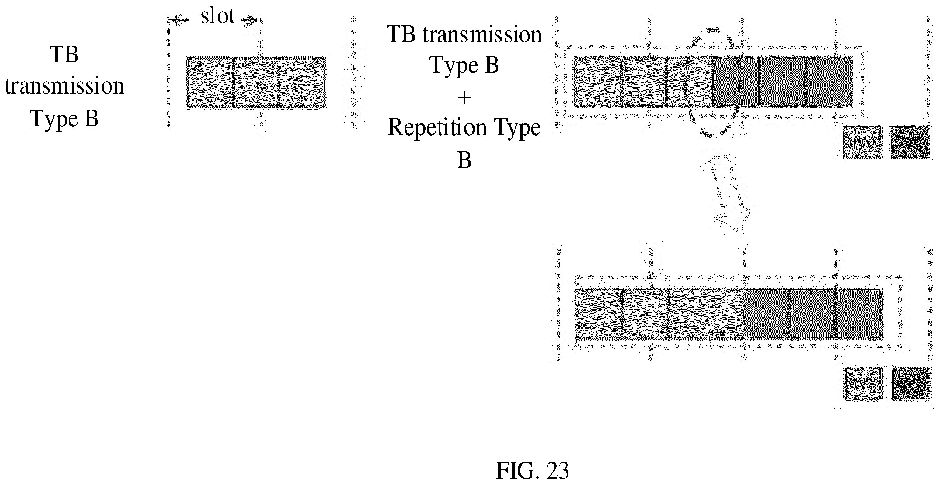

For example, as illustrated in FIG. 23, there are target symbol resources corresponding to two TBs in the same slot (shown in the oval dashed box), in this case, it is possible to extend the end position of the target symbol resource of the former TB to the last symbol in that slot, and delay the overall target symbol resource of the latter TB backward. That is, the start position of the target symbol resource of the latter TB is delayed to the first symbol of the next slot of the slot, and the end position of the target symbol resource occupied by the latter TB is delayed correspondingly according to the number of extended symbols delayed at the start position of the latter TB.

It should be noted that the above is only an example of extending the time domain resource of the former part to the last available symbol of the slot in which it is located, and delaying the whole latter part to the first available symbol of the next slot. In practice, the time domain resources of the former part can be extended to the last available symbol of the slot in which it is located, while the whole latter part is compressed without extension.

In detail, the target symbol resources of the multiple TBs may be determined based on the resource indication information. In the case where the target symbol resources corresponding to two TBs are included in one slot, the end position of the target symbol resource of the former TB is extended to the last symbol in the slot, and the latter TB is compressed without extension, so that the start position of the target symbol resource of the latter TB is started from the first symbol of the next slot after the slot.

According to the resource indication method of the embodiment of the disclosure, the terminal device receives the resource indication information of the TB sent by the network device, in which the TB occupies one or more target symbol resources of at least one target slot. The resource indication information is used to indicate the number of slots of the target slot, and/or, is used to indicate the number of symbols of the one or more target symbol resources. In this way, the terminal device can realize transmission of the same TB over multiple slots, which can reduce the coding rate of the TB, save the bit overhead for the cyclic redundant check, and increase the code length of the TB, thereby improving the transmission performance, and achieving the coverage enhancement. Repetition transmission of the multiple TBs is performed according to the resource indication information, in which RVs or TB information bits of adjacent TBs in the multiple TBs are different, and the target symbol resources occupied by the multiple TBs are adjacent to each other. In this way, the further coverage enhancement can be achieved.

The ninth embodiment and the tenth embodiment are described in detail in combination with embodiment D.

In the embodiment D, the feature of "transmitting one TB on multiple PUSCHs" is used in combination with the existing "repetition transmission" feature.

The background introduction of "repetition transmission" in the related art can be seen in FIG. 1 above.

In the embodiment of the disclosure, when the feature of "transmitting one TB on multiple PUSCHs" is used in combination with the "repetition transmission" feature, three combination modes are considered as follows.

First mode, "TB transmission Type A" + "Repetition Type A"

As illustrated in FIG. 19, the overall N PUSCHs carrying the same TB in the TB transmission Type A are taken as a unit to be repeated, and then repetition is performed for K times in the time domain in accordance with the rule of the repetition Type A. In this case, a total of N*K PUSCHs are transmitted in N*K slots, each slot includes one PUSCH. Each of the K repetitions includes the same time domain resources occupied by the N PUSCHs and each slot contains the same allocated symbols. The N PUSCHs in each repetition carry one TB collectively. The RVs of different repetition units can be different, for example, they can be cyclic in a predefined order, or, the RVs of different repetition units can be the same.

Second mode, "TB transmission Type B" + "Repetition Type A"

As illustrated in FIG. 20, the overall N PUSCHs carrying the same TB in the TB transmission Type A are taken as a unit to be repeated, and then repetition is performed for K times in the time domain in accordance with the rule of the repetition Type A. In this case, a total of N*K PUSCHs are transmitted in M*K slots, each slot includes N PUSCHs. The time domain resources occupied by the N PUSCHs included in each of the K repetitions are the same and adjacent to each other. The N PUSCHs in each repetition carry one TB collectively. Similarly, the RVs of different repetition units can be different or the same.

Third mode, "TB transmission Type B" + "Repetition Type B"

As illustrated in FIG. 22, the overall N PUSCHs carrying the same TB in the TB transmission Type B are taken as a unit to be repeated, and then repetition is performed for K times in the time domain in accordance with the rule of the repetition Type B. In this case, a total of N*K PUSCHs are transmitted, and these PUSCHs are adjacent to each other in the time domain. The N PUSCHs included in each of the K repetitions carry one TB collectively. Similarly, the RVs of different repetition units can be different or the same.

In particular, considering that it may be difficult for the terminal device to send 2 different TBs or different RVs of the same TB in one slot, the above third mode can be further processed and optimized as follows: as shown in FIG. 23, when "multiple PUSCHs carrying the same TB" is followed by further "multiple PUSCHs carrying the same TB", if both parts are in the same slot, the time domain resource of the former part is extended to the last available symbol of the slot where it is located, while the whole latter portion is delayed and started from the first available symbol of the next slot.

Accordingly, the coverage performance can be further enhanced by using the feature of "transmitting one TB on multiple PUSCHs" in combination with the existing "repetition transmission" feature.

It should be noted that for all the above embodiments, the TB transmission resources should only be transmitted on the "available uplink resources". If the PUSCH resources (i.e., the target symbol resources) indicated according to any indication mode include resources that are not available for PUSCH transmission (e.g., overlapping with downlink symbols in the time domain), these unavailable resources should be removed from the resources actually used for the PUSCH transmission, i.e., "adjacent" or "adjacent tightly" refers to that resources in the resource set consisting of "available uplink resources" are adjacent or adjacent tightly.

Compared to the related art that does not support unified encoding and transmission of one TB across multiple slots, as well as does not support the time domain resource allocation for transmission of one TB over multiple slots, the above solution of the disclosure enables unified encoding and transmission of one TB across multiple slots, and designs the corresponding time domain resource (i.e., target symbol resource) allocation, which can reduce the encoding rate of the TB, increase the code length of the TB, thereby improving the transmission performance and enhancing the coverage.

The technical solutions provided by the embodiments of the disclosure can be applied to various systems, especially the 5G system. For example, the applicable systems can be the Global System of Mobile communication (GSM) system, the Code Division Multiple Access (CDMA) system, the Wideband Code Division Multiple Access (WCDMA) General Packet Radio Service (GPRS) system, the Long Term Evolution (LTE) system, the LTE Frequency Division Duplex (FDD) system, the LTE Time Division Duplex (TDD) system, the Long Term Evolution Advanced (LTE-A) system, the Universal Mobile Telecommunication System (UMTS), the Worldwide interoperability for Microwave Access (WiMAX) system, the 5G New Radio (NR) system, etc. Each of these various systems include a terminal device and a network device. The system may also include core network parts, such as the Evolved Packet System (EPS), the 5G System (5GS), etc.

In order to realize the above embodiments, the disclosure also provides a resource indication apparatus.

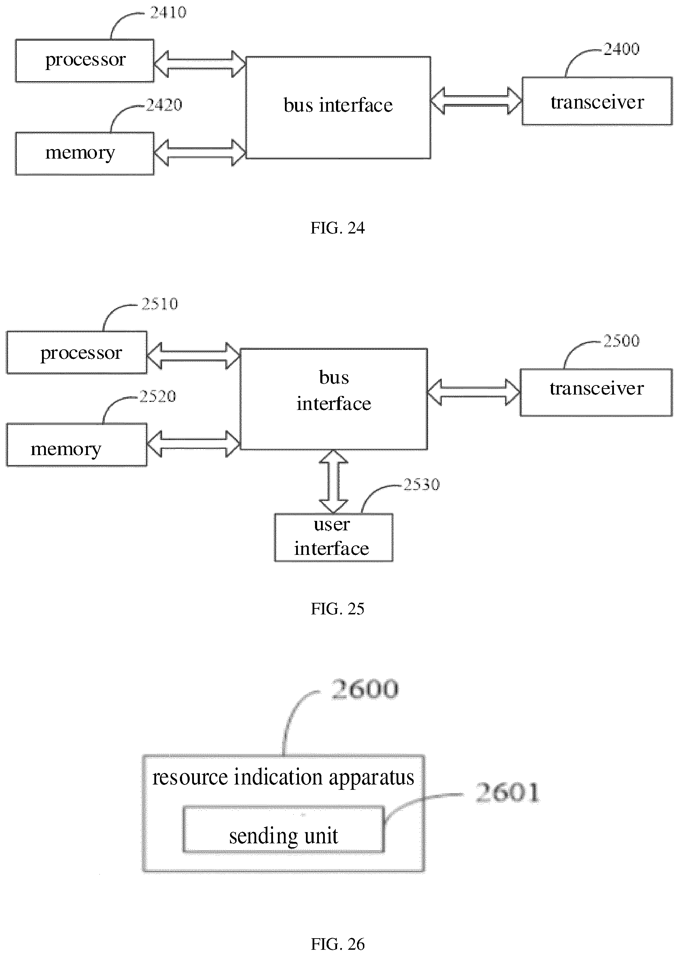

FIG. 24 is a schematic diagram of a resource indication apparatus according to an eleventh embodiment of the disclosure.

As illustrated in FIG. 24, the resource indication apparatus is applied to a network device, and the apparatus may include: a transceiver 2400, a processor 2410, and a memory 2420.

The memory 2420 is configured to store computer programs. The transceiver 2400 is configured to send and receive data under control of the processor 2410. The processor 2410 is configured to read the computer programs in the memory 2420 and perform the following operations: sending resource indication information of a TB to a terminal device, in which the TB occupies one or more target symbol resources of at least one target slot, the resource indication information is used to indicate a number of slots of the target slot, and/or, is used to indicate a number of symbols of the one or more target symbol resources.

The transceiver 2400 is configured to send and receive data under the control of the processor 2410.

In FIG. 24, the bus architecture may include any number of interconnected buses and bridges, specifically one or more processors represented by the processor 2410 and various circuits of the memory represented by the memory 2420 are linked together. The bus architecture may also link peripheral devices, voltage regulators, and various other circuits such as power management circuits together, which are well known in the art and will not be further described herein. The bus interface provides an interface. The transceiver 2400 may include a plurality of elements, i.e., including a transmitter and a receiver, and provides units for communicating with various other devices over transmission mediums, such as wireless channels, wired channels, fiber optic cables, etc. The processor 2410 is responsible for managing the bus architecture and usual processing, and the memory 2420 may store the data used by the processor 2410 in performing operations.

The processor 2410 can be a Central Processing Unit (CPU), an Application Specific Integrated Circuit (ASIC), a Field Programmable Gate Array (FPGA) or a Complex Programmable Logic Device (CPLD). The processor 2410 can also adopt a multi-core architecture.

In a possible implementation of the embodiment of the disclosure, the resource indication information includes a first TDRA table. The first TDRA table includes at least one PUSCH allocation information element, and the at least one PUSCH allocation information element includes start and length indication information. The start and length indication information is a SLIV, the SLIV is used to indicate a start symbol position of the first target symbol resource in the first target slot, or, to indicate a start symbol position and a symbol length of the target symbol resource in each target slot. Alternatively, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

Further, in another possible implementation of the embodiment of the disclosure, the resource indication information further includes slot number indication information. The slot number indication information is included in the PUSCH allocation information element, and is used to indicate the number of slots of a target slot corresponding to the PUSCH allocation information element. Alternatively, the slot number indication information is not included in the PUSCH allocation information element, and is used to indicate the number of slots of a target slot corresponding to any PUSCH allocation information element.

Further, in another possible implementation of the embodiment of the disclosure, the resource indication information includes repetition number indication information, and the repetition number indication information is used to determine the number of slots of the target slot. Alternatively, the resource indication information includes repetition number indication information and reuse indication information, in which the repetition number indication information is used to determine the number of slots of the target slot in the case that the reuse indication information is a predefined value or a predefined state.

Further, in another possible implementation of the embodiment of the disclosure, the resource indication information includes the repetition number indication information, and the resource indication method further includes: sending first DCI for scheduling the TB to the terminal device, in which the first DCI includes reuse indication information, and the repetition number indication information is used to determine the number of slots of the target slot in the case that the reuse indication information is a predefined value or a predefined state.

Further, in another possible implementation of the embodiment of the disclosure, the method further includes: sending second DCI for scheduling the TB to the terminal device, the second DCI including a first indication field, in which the first indication field is used to indicate the number of slots of the target slot, and the number of slots indicated by the first indication field is determined based on the number of slots indicated by the resource indication information.

Further, in another possible implementation of the embodiment of the disclosure, the resource indication information includes a second TDRA table. The second TDRA table includes at least one PUSCH allocation information element, the at least one PUSCH allocation information element includes a list of start and length indication information. The list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate a start symbol position and a symbol length of the target symbol resource in each target slot.

Further, in another possible implementation of the embodiment of the disclosure, the resource indication information includes a third TDRA table. The third TDRA table includes at least one PUSCH allocation information element, the at least one PUSCH allocation information element includes slot indication information and start and length indication information. The slot indication information is used to indicate a start slot position and a number of slots of a plurality of the target slots. The start and length indication information is used to indicate a start symbol position of the first target symbol resource in the first target slot, or, to indicate a start symbol position and a symbol length of the target symbol resource in each target slot.

Further, in another possible implementation of the embodiment of the disclosure, the resource indication information includes a fourth TDRA table. The fourth TDRA table includes at least one PUSCH allocation information element, the at least one PUSCH allocation information element includes a SLIV. In response to the SLIV falling within a first interval, the PUSCH allocation information element corresponds to one target slot, and the SLIV is used to indicate a start symbol position and a symbol length of the target symbol resource in the target slot. Alternatively, in response to the SLIV falling within a second interval, the PUSCH allocation information element corresponds to a plurality of target slots, and the SLIV is used to indicate a start slot position and a slot length of the plurality of target slots. The first interval and the second interval have no intersection.

Further, in another possible implementation of the embodiment of the disclosure, each target slot includes one target symbol resource, and target symbol resources in respective target slots have the same start symbol position and the same symbol length.

Further, in another possible implementation of the embodiment of the disclosure, in the target symbol resources occupied by the TB, symbols occupied by adjacent target symbol resources are adjacent to each other, or, adjacent target symbol resources are separated by an unavailable symbol and are not separated by an available symbol.

It is noted that the above-described resource indication apparatus provided by the embodiment of the disclosure is capable of achieving all the method steps implemented in the method embodiments of FIGS. 3 to 16 above, and achieving the same technical effects, and the same parts of the method embodiments and beneficial effects in the embodiments will not be specifically described herein.

In order to realize the above embodiments, the disclosure also provides a resource indication apparatus.

FIG. 25 is a schematic diagram of a resource indication apparatus according to a twelfth embodiment of the disclosure.

As illustrated in FIG. 25, the resource indication apparatus is applied to a terminal device and may include: a transceiver 2500, a processor 2510, a memory 2520, and a user interface 2530.

The memory 2520 is configured to store computer programs. The transceiver 2500 is configured to send and receive data under control of the processor 2510. The processor 2510 is configured to read the computer programs in the memory 2520 and perform the following operations: receiving resource indication information of a TB sent by a network device, in which the TB occupies one or more target symbol resources of at least one target slot, the resource indication information is used to indicate a number of slots of the target slot, and/or, is used to indicate a number of symbols of the one or more target symbol resources.

The transceiver 2500 is configured to send and receive data under the control of the processor 2510.

In FIG. 25, the bus architecture may include any number of interconnected buses and bridges, specifically one or more processors represented by the processor 2510 and various circuits of the memory represented by the memory 2520 are linked together. The bus architecture may also link peripheral devices, voltage regulators, and various other circuits such as power management circuits together, which are well known in the art and will not be further described herein. The bus interface provides an interface. The transceiver 2500 may include a plurality of elements, i.e., including a transmitter and a receiver, and provides units for communicating with various other devices over transmission mediums, such as wireless channels, wired channels, fiber optic cables, etc. For different UEs, the user interface 2530 can also be an interface capable of externally and internally connecting required devices, the connected devices include but not limited to keyboards, displays, speakers, microphones, joysticks, etc.

The processor 2510 is responsible for managing the bus architecture and the usual processing, and the memory 2520 can store the data used by the processor 2510 in performing its operations.

In some embodiments, the processor 2510 may be a CPU, an ASIC, a FPGA, or a CPLD, and the processor 2510 may also adopt a multi-core architecture.

The processor 2510 is used to perform any of the methods of FIGS. 17 to 21 provided in embodiments of the disclosure by calling computer programs stored in the memory and executing the obtained executable instructions. The processor 2510 and the memory 2520 may also be physically separately arranged.

In a possible implementation of the embodiment of the disclosure, the resource indication information includes a first TDRA table. The first TDRA table includes at least one PUSCH allocation information element, and the at least one PUSCH allocation information element includes start and length indication information. The start and length indication information is a SLIV, the SLIV is used to indicate a start symbol position of the first target symbol resource in the first target slot, or, to indicate a start symbol position and a symbol length of the target symbol resource in each target slot. Alternatively, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

In another possible implementation of the embodiment of the disclosure, the resource indication information further includes slot number indication information. The slot number indication information is included in the PUSCH allocation information element, and is used to indicate the number of slots of a target slot corresponding to the PUSCH allocation information element. Alternatively, the slot number indication information is not included in the PUSCH allocation information element, and is used to indicate the number of slots of a target slot corresponding to any PUSCH allocation information element.

In another possible implementation of the embodiment of the disclosure, the resource indication information includes repetition number indication information, and the repetition number indication information is used to determine the number of slots of the target slot. Alternatively, the resource indication information includes repetition number indication information and reuse indication information, in which the repetition number indication information is used to determine the number of slots of the target slot in the case that the reuse indication information is a predefined value or a predefined state.

In another possible implementation of the embodiment of the disclosure, the resource indication information includes the repetition number indication information, and the resource indication method further includes: receiving first DCI for scheduling the TB sent by the network device, in which the first DCI includes reuse indication information, and the repetition number indication information is used to determine the number of slots of the target slot in the case that the reuse indication information is a predefined value or a predefined state.

In another possible implementation of the embodiment of the disclosure, the method further includes: receiving DCI for scheduling the TB sent by the network device, in which the DCI includes a first indication field, the first indication field is used to indicate the number of slots of the target slot.

In another possible implementation of the embodiment of the disclosure, the resource indication information includes a second TDRA table. The second TDRA table includes at least one PUSCH allocation information element, the at least one PUSCH allocation information element includes a list of start and length indication information. The list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate a start symbol position and a symbol length of the target symbol resource in each target slot.

In another possible implementation of the embodiment of the disclosure, the resource indication information includes a third TDRA table. The third TDRA table includes at least one PUSCH allocation information element, the at least one PUSCH allocation information element includes slot indication information and start and length indication information. The slot indication information is used to indicate a start slot position and a number of slots of a plurality of the target slots. The start and length indication information is used to indicate a start symbol position of the first target symbol resource in the first target slot, or, to indicate a start symbol position and a symbol length of the target symbol resource in each target slot.

In another possible implementation of the embodiment of the disclosure, the resource indication information includes a fourth TDRA table. The fourth TDRA table includes at least one PUSCH allocation information element, the at least one PUSCH allocation information element includes a SLIV. In response to the SLIV falling within a first interval, the PUSCH allocation information element corresponds to one target slot, and the SLIV is used to indicate a start symbol position and a symbol length of the target symbol resource in the target slot. Alternatively, in response to the SLIV falling within a second interval, the PUSCH allocation information element corresponds to a plurality of target slots, and the SLIV is used to indicate a start slot position and a slot length of the plurality of target slots. The first interval and the second interval have no intersection.

In a possible implementation of the embodiment of the disclosure, each target slot includes one target symbol resource, and target symbol resources in respective target slots have the same start symbol position and the same symbol length.

In a possible implementation of the embodiments of the disclosure, in the target symbol resources occupied by the TB, symbols occupied by adjacent target symbol resources are adjacent to each other, or, adjacent target symbol resources are separated by an unavailable symbol and are not separated by an available symbol.

It is noted that the above-described resource indication apparatus provided by the embodiments of the disclosure is capable of achieving all the method steps implemented in the method embodiments of FIGS. 17 to 21 above, and achieving the same technical effects, and the same parts of the method embodiments and beneficial effects in the embodiments will not be specifically described herein.

Corresponding to the resource indication method provided in the embodiments of FIGS. 3 to 16 above, the disclosure also provides a resource indication apparatus. Since the resource indication apparatus provided in the embodiments of the disclosure corresponds to the resource indication method provided in the embodiments of FIGS. 3 to 16 above, the implementation of the resource indication method can also be applied to the resource indication apparatus provided in the embodiments of the disclosure, which is not described in detail in the embodiments of the disclosure.

FIG. 26 is a schematic diagram of a resource indication apparatus according to a thirteenth embodiment of the disclosure.

As illustrated in FIG. 26, the resource indication apparatus 2600 is applicable to a network device, and the apparatus may include: a sending unit 2601.

The sending unit 2601 is configured to send resource indication information of a TB to a terminal device, in which the TB occupies one or more target symbol resources of at least one target slot.

The resource indication information is used to indicate a number of slots of the target slot, and/or, is used to indicate a number of symbols of the one or more target symbol resources.

In a possible implementation of the embodiment of the disclosure, the resource indication information includes a first TDRA table. The first TDRA table includes at least one PUSCH allocation information element, and the at least one PUSCH allocation information element includes start and length indication information. The start and length indication information is a SLIV, the SLIV is used to indicate a start symbol position of the first target symbol resource in the first target slot, or, to indicate a start symbol position and a symbol length of the target symbol resource in each target slot. Alternatively, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

Further, in another possible implementation of the embodiment of the disclosure, the resource indication information further includes slot number indication information. The slot number indication information is included in the PUSCH allocation information element, and is used to indicate the number of slots of a target slot corresponding to the PUSCH allocation information element. Alternatively, the slot number indication information is not included in the PUSCH allocation information element, and is used to indicate the number of slots of a target slot corresponding to any PUSCH allocation information element.

Further, in another possible implementation of the embodiment of the disclosure, the resource indication information includes repetition number indication information, and the repetition number indication information is used to determine the number of slots of the target slot. Alternatively, the resource indication information includes repetition number indication information and reuse indication information, in which the repetition number indication information is used to determine the number of slots of the target slot in the case that the reuse indication information is a predefined value or a predefined state.

Further, in another possible implementation of the embodiment of the disclosure, the resource indication information includes the repetition number indication information. The sending unit 2601 is further configured to: send first DCI for scheduling the TB to the terminal device, in which the first DCI includes reuse indication information, and the repetition number indication information is used to determine the number of slots of the target slot in the case that the reuse indication information is a predefined value or a predefined state.

Further, in another possible implementation of the embodiment of the disclosure, the sending unit 2601 is further configured to: send second DCI for scheduling the TB to the terminal device, the second DCI including a first indication field, in which the first indication field is used to indicate the number of slots of the target slot, and the number of slots indicated by the first indication field is determined based on the number of slots indicated by the resource indication information.

Further, in another possible implementation of the embodiment of the disclosure, the resource indication information includes a second TDRA table. The second TDRA table includes at least one PUSCH allocation information element, the at least one PUSCH allocation information element includes a list of start and length indication information. The list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate a start symbol position and a symbol length of the target symbol resource in each target slot.

Further, in another possible implementation of the embodiment of the disclosure, the resource indication information includes a third TDRA table. The third TDRA table includes at least one PUSCH allocation information element, the at least one PUSCH allocation information element includes slot indication information and start and length indication information. The slot indication information is used to indicate a start slot position and a number of slots of a plurality of the target slots. The start and length indication information is used to indicate a start symbol position of the first target symbol resource in the first target slot, or, to indicate a start symbol position and a symbol length of the target symbol resource in each target slot.

Further, in another possible implementation of the embodiment of the disclosure, the resource indication information includes a fourth TDRA table. The fourth TDRA table includes at least one PUSCH allocation information element, the at least one PUSCH allocation information element includes a SLIV. In response to the SLIV falling within a first interval, the PUSCH allocation information element corresponds to one target slot, and the SLIV is used to indicate a start symbol position and a symbol length of the target symbol resource in the target slot. Alternatively, in response to the SLIV falling within a second interval, the PUSCH allocation information element corresponds to a plurality of target slots, and the SLIV is used to indicate a start slot position and a slot length of the plurality of target slots. The first interval and the second interval have no intersection.

Further, in a possible implementation of the embodiment of the disclosure, each target slot includes one target symbol resource, and target symbol resources in respective target slots have the same start symbol position and the same symbol length.

Further, in a possible implementation of the embodiment of the disclosure, in the target symbol resources occupied by the TB, symbols occupied by adjacent target symbol resources are adjacent to each other, or, adjacent target symbol resources are separated by an unavailable symbol and are not separated by an available symbol.

It is noted that the above-described resource indication apparatus provided by the embodiments of the disclosure is capable of achieving all the method steps implemented in the method embodiments of FIGS. 3 to 16 above, and achieving the same technical effects, and the same parts of the method embodiments and beneficial effects in the embodiments will not be specifically described herein.

Corresponding to the resource indication method provided in the embodiments of FIGS. 17 to 21 above, the disclosure also provides a resource indication apparatus. Since the resource indication apparatus provided in the embodiments of the disclosure corresponds to the resource indication method provided in the embodiments of FIGS. 17 to 21 above, the implementation of the resource indication method can also be applied to the resource indication apparatus provided in the embodiments of the disclosure, which is not described in detail in the embodiments of the disclosure.

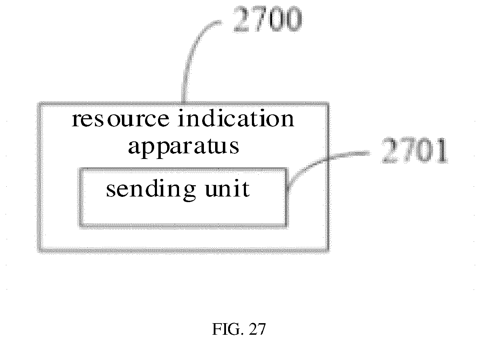

FIG. 27 is a schematic diagram of a resource indication apparatus according to a fourteenth embodiment of the disclosure.

As illustrated in FIG. 27, the resource indication apparatus 2700 is applicable to a terminal device. The apparatus includes: a receiving unit 2701.

The receiving unit 2701 is configured to receive resource indication information of a TB sent by a network device, in which the TB occupies one or more target symbol resources of at least one target slot.

The resource indication information is used to indicate a number of slots of the target slot, and/or, is used to indicate a number of symbols of the one or more target symbol resources.

In a possible implementation of the embodiment of the disclosure, the resource indication information includes a first TDRA table. The first TDRA table includes at least one PUSCH allocation information element, and the at least one PUSCH allocation information element includes start and length indication information. The start and length indication information is a SLIV, the SLIV is used to indicate a start symbol position of the first target symbol resource in the first target slot, or, to indicate a start symbol position and a symbol length of the target symbol resource in each target slot. Alternatively, the start and length indication information includes start symbol indication information S and symbol length indication information L. The start symbol indication information S is used to indicate the start symbol position of the first target symbol resource in the first target slot, or, to indicate the start symbol position of the target symbol resource in each target slot. The symbol length indication information L is used to indicate a symbol length of the first target symbol resource in the first target slot, or, to indicate the symbol length of the target symbol resource in each target slot.

In another possible implementation of the embodiment of the disclosure, the resource indication information further includes slot number indication information. The slot number indication information is included in the PUSCH allocation information element, and is used to indicate the number of slots of a target slot corresponding to the PUSCH allocation information element. Alternatively, the slot number indication information is not included in the PUSCH allocation information element, and is used to indicate the number of slots of a target slot corresponding to any PUSCH allocation information element.

In another possible implementation of the embodiment of the disclosure, the resource indication information includes repetition number indication information, and the repetition number indication information is used to determine the number of slots of the target slot. Alternatively, the resource indication information includes repetition number indication information and reuse indication information, in which the repetition number indication information is used to determine the number of slots of the target slot in the case that the reuse indication information is a predefined value or a predefined state.

In another possible implementation of the embodiment of the disclosure, the resource indication information further includes the repetition number indication information. The receiving unit 2701 is further configured to: receive first DCI for scheduling the TB sent by the network device, in which the first DCI includes reuse indication information, and the repetition number indication information is used to determine the number of slots of the target slot in the case that the reuse indication information is a predefined value or a predefined state.

In another possible implementation of the embodiment of the disclosure, the receiving unit 2701 is further configured to: receive second DCI for scheduling the TB sent by the network device, the second DCI including a first indication field, in which the first indication field is used to indicate the number of slots of the target slot, and the number of slots indicated by the first indication field is determined based on the number of slots indicated by the resource indication information.

In another possible implementation of the embodiment of the disclosure, the resource indication information includes a second TDRA table. The second TDRA table includes at least one PUSCH allocation information element, the at least one PUSCH allocation information element includes a list of start and length indication information. The list of start and length indication information includes a plurality of pieces of start and length indication information, a number of pieces of start and length indication information in a valid state included in the list of start and length indication information is equal to the number of slots of the target slot. The start and length indication information in the valid state in the list of start and length indication information is used to indicate a start symbol position and a symbol length of the target symbol resource in each target slot.

In another possible implementation of the embodiments of the disclosure, the resource indication information includes a third TDRA table. The third TDRA table includes at least one PUSCH allocation information element, the at least one PUSCH allocation information element includes slot indication information and start and length indication information. The slot indication information is used to indicate a start slot position and a number of slots of a plurality of the target slots. The start and length indication information is used to indicate a start symbol position of the first target symbol resource in the first target slot, or, to indicate a start symbol position and a symbol length of the target symbol resource in each target slot.

In another possible implementation of the embodiment of the disclosure, the resource indication information includes a fourth TDRA table. The fourth TDRA table includes at least one PUSCH allocation information element, the at least one PUSCH allocation information element includes a SLIV. In response to the SLIV falling within a first interval, the PUSCH allocation information element corresponds to one target slot, and the SLIV is used to indicate a start symbol position and a symbol length of the target symbol resource in the target slot. Alternatively, in response to the SLIV falling within a second interval, the PUSCH allocation information element corresponds to a plurality of target slots, and the SLIV is used to indicate a start slot position and a slot length of the plurality of target slots. The first interval and the second interval have no intersection.

In a possible implementation of the embodiment of the disclosure, each target slot includes one target symbol resource, and target symbol resources in respective target slots have the same start symbol position and the same symbol length.

In a possible implementation of the embodiment of the disclosure, in the target symbol resources occupied by the TB, symbols occupied by adjacent target symbol resources are adjacent to each other, or, adjacent target symbol resources are separated by an unavailable symbol and are not separated by an available symbol.

It is noted that the above-described resource indication apparatus provided by the embodiments of the disclosure is capable of achieving all the method steps implemented in the method embodiments of FIGS. 17 to 21 above, and achieving the same technical effects, and the same parts of the method embodiments and beneficial effects in the embodiments will not be specifically described herein.

It should be noted that respective functional units in various embodiments of the disclosure may be integrated in one processing unit, or each unit may be physically present separately, or two or more units may be integrated in one unit. The above integrated units can be implemented either in the form of hardware or in the form of software functional units.

Integrated units can be stored in a processor-readable storage medium if they are implemented in the form of software functional units and sold or used as independent products. Based on this understanding, the essence of the technical solutions of the disclosure, parts of the technical solution of the disclosure that contribute to the related art, or all or part of the technical solution of the disclosure can be embodied in the form of software products. The computer software product is stored in a storage medium and includes several instructions to make a computer device (which can be a personal computer, a server, and a network device, etc.) or a processor perform all or part of the steps of the methods of various embodiments of the disclosure. The above storage medium include: an USB flash drive, a mobile hard drive, a Read-Only Memory (ROM), a Random Access Memory (RAM), a disk or a CD-ROM, and other mediums that can store program codes.

To implement the above embodiments, the disclosure also provides a processor-readable storage medium.

The processor-readable storage medium stores computer programs that are used to cause a processor to perform the resource indication method of the embodiments of FIGS. 3 to 16 of the disclosure.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

In order to realize the above embodiments, the disclosure also provides another processor-readable storage medium.

The processor-readable storage medium stores computer programs for causing a processor to execute the resource indication method described in the embodiments of FIGS. 17 to 21 of the disclosure.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

To implement the above embodiments, the disclosure also provides a computer program product including computer program codes. When the computer program codes are running on a computer, the resource indication method of the embodiments of FIGS. 3 to 16 of the disclosure is implemented.

To implement the above embodiments, the disclosure also provides another computer program product including computer program codes. When the computer program codes are running on a computer, the resource indication method of the embodiments of FIGS. 17 to 21 of the disclosure is implemented.

To implement the above embodiments, the disclosure also provides a communication device including a processing circuit and an interface circuit. The interface circuit is configured to receive computer codes or instructions and transmit them to the processing circuit. The processing circuit is configured to run the computer codes or instructions to implement the resource indication method of the embodiments of FIGS. 3 to 16 of the disclosure.

To implement the above embodiments, the disclosure also provides another communication device including a processing circuit and an interface circuit. The interface circuit is configured to receive computer codes or instructions and transmit them to the processing circuit. The processing circuit is configured to run the computer codes or instructions to implement the resource indication method of the embodiments of FIGS. 17 to 21 of the disclosure.

To implement the above embodiments, the disclosure also provides a computer program including computer program codes. When the computer program codes are running on a computer, the computer is caused to implement the resource indication method of the embodiments of FIGS. 3 to 16 of the disclosure.

To implement the above embodiments, the disclosure also provides another computer program including computer program codes. When the computer program codes are running on a computer, the computer is caused to implement the resource indication method of the embodiments of FIGS. 17 to 21 of the disclosure.

Those skilled in the art should understand that the embodiments of the disclosure may be provided as methods, systems, or computer program products. Therefore, the disclosure may take the form of an entirely hardware embodiment, an entirely software embodiment, or an embodiment combining software and hardware aspects. The disclosure may take the form of a computer program product implemented on one or more computer-usable storage mediums (including, but not limited to, disk memory and optical memory, etc.) that contain computer-usable program codes therein.

The disclosure is described with reference to flowcharts and/or block diagrams of methods, devices (systems), and computer program products according to embodiments of the disclosure. It is understood that each process and/or box in the flowchart and/or block diagram, and the combination of processes and/or boxes in the flowchart and/or block diagram, may be implemented by computer-executable instructions. These computer executable instructions may be provided to a processor of a general purpose computer, a specialized computer, an embedded processor, or other programmable data processing device to produce a machine, such that the instructions executed by the processor of the computer or other programmable data processing device produce a device for implementing the functions specified in one or more processes of the flowchart and/or one or more boxes of the block diagram.

These processor-executable instructions may also be stored in a processor-readable memory that can direct a computer or other programmable data processing devices to function in a particular manner, such that the instructions stored in the processor-readable memory produce an article of manufacture including instruction devices that implement the functions specified in one or more processes of the flowchart and/or one or more boxes of the block diagram.

These processor-executable instructions may also be loaded onto a computer or other programmable data processing devices, such that a series of operational steps are performed on the computer or other programmable devices to produce computer-implemented processing. Therefore, the instructions executed on the computer or other programmable devices provide steps for implementing the functions specified in one or more processes of the flowchart and/or one or more boxes of the block diagram.

Obviously, those skilled in the art can make various changes and variations to the disclosure without departing from the spirit and scope of the disclosure. If such modifications and variations of the disclosure are within the scope of the claims of the disclosure and their technical equivalents, the disclosure is intended to include such modifications and variations as well.

All the embodiments of the disclosure may be performed alone or in combination with other embodiments and are considered to be within the scope of protection of the claims of the disclosure.

**Claims**

1. A resource indication method, applicable to a network device, comprising:

   sending resource indication information of a Transport Block (TB) to a terminal device, wherein the TB occupies one or more target symbol resources of at least one target slot;
   wherein, the resource indication information is used to indicate a number of slots of the target slot, and/or, the resource indication information is used to indicate a number of symbols of the one or more target symbol resources.

2. The method of claim 1, wherein the resource indication information comprises a first Time Domain Resource Allocation (TDRA) table; wherein,

   the first TDRA table comprises at least one Physical Uplink Shared Channel (PUSCH) allocation information element, and the at least one PUSCH allocation information element comprises start and length indication information;

the start and length indication information is a Start And Length Indicator Value (SLIV), the SLIV is used to indicate a start symbol position of the first one of the one or more target symbol resources in the first one of the at least one target slot, or, the SLIV is used to indicate a start symbol position and a symbol length of the target symbol resource in each target slot;

or,

the start and length indication information comprises start symbol indication information S and symbol length indication information L, the start symbol indication information S is used to indicate a start symbol position of the first one of the one or more target symbol resources in the first one of the at least one target slot, or, the start symbol indication information S is used to indicate a start symbol position of the target symbol resource in each target slot; the symbol length indication information L is used to indicate a symbol length of the first one of the one or more target symbol resources in the first one of the at least one target slot, or, the symbol length indication information L is used to indicate a symbol length of the target symbol resource in each target slot.

3. The method of claim 2, wherein the resource indication information further comprises slot number indication information,

the slot number indication information is included in a PUSCH allocation information element, and the slot number indication information is to indicate a number of slots of at least one target slot corresponding to the PUSCH allocation information element comprising the slot number indication information;

or,

the slot number indication information is not included in any PUSCH allocation information element, and the slot number indication information is used to indicate a number of slots of at least one target slot corresponding to any PUSCH allocation information element.

4. The method of claim 1, wherein,

the resource indication information comprises repetition number indication information, and the repetition number indication information is used to determine the number of slots of the target slot;

or,

the resource indication information comprises repetition number indication information and reuse indication information, wherein the repetition number indication information is used to determine the number of slots of the target slot in the case that the reuse indication information is a predefined value or a predefined state.

5. The method of claim 4, wherein the resource indication information comprises the repetition number indication information, and the resource indication method further comprises:
sending first Downlink Control Information (DCI) for scheduling the TB to the terminal device, wherein the first DCI comprises reuse indication information, and the repetition number indication information is used to determine the number of slots of the target slot in the case that the reuse indication information is a predefined value or a predefined state.

6. The method of claim 1, further comprising:

sending second DCI for scheduling the TB to the terminal device, the second DCI comprising a first indication field; wherein, the first indication field is used to indicate the number of slots of the target slot, wherein the number of slots indicated by the first indication field is determined based on the number of slots indicated by the resource indication information.

7. The method of claim 1, wherein the resource indication information comprises a second TDRA table; wherein,

the second TDRA table comprises at least one PUSCH allocation information element, the at least one PUSCH allocation information element comprises a list of start and length indication information;
the list of start and length indication information comprises a plurality of pieces of start and length indication information, a number of pieces of start and length indication information in a valid state included in the list of start and length indication information is equal to the number of slots of the target slot corresponding to the PUSCH allocation information element comprising the list of start and length indication information; and
the start and length indication information in the valid state in the list of start and length indication information is used to indicate a start symbol position and a symbol length of the target symbol resource in each target slot.

8. The method of claim 1, wherein the resource indication information comprises a third TDRA table; wherein,

the third TDRA table comprises at least one PUSCH allocation information element, the at least one PUSCH allocation information element comprises slot indication information and start and length indication information; the slot indication information is used to indicate a start slot position and a number of slots of a plurality of target slots; and the start and length indication information is used to indicate a start symbol position of the first one of the one or more target symbol resources in the first one of the at least one target slot, or, the start and length indication information is used to indicate a start symbol position and a symbol length of the target symbol resource in each target slot.

9. The method of claim 1, wherein the resource indication information comprises a fourth TDRA table; wherein,

the fourth TDRA table comprises at least one PUSCH allocation information element, the at least one PUSCH allocation information element comprises a SLIV; in response to the SLIV falling within a first interval, the PUSCH allocation information element corresponds to one target slot, and the SLIV is used to indicate a start symbol position and a symbol length of the target symbol resource in the target slot; or in response to the SLIV falling within a second interval, the PUSCH allocation information element corresponds to a plurality of target slots, and the SLIV is used to indicate a start slot position and a slot length of the plurality of target slots; and the first interval and the second interval have no intersection.

10. The method of claim 1, wherein two or more TBs are received based on the resource indication information, wherein adjacent TBs of the two or more TBs have different redundant versions, or adjacent TBs of the two or more TBs have different information bits, and each TB of the two or more TBs comprises a same number of target slots, and respective target slots comprise target symbol resources with a same number of symbols and a same symbol position.

11. The method of any one of claims 1-10, wherein each target slot comprises one target symbol resource, and target symbol resources in respective target slots have a same start symbol position and a same symbol length.

12. The method of any one of claims 1-11, wherein in the one or more target symbol resources occupied by the TB, symbols occupied by adjacent target symbol resources are adjacent to each other, or, adjacent target symbol resources are separated by an unavailable symbol and are not separated by an available symbol.

13. A resource indication method, applicable to a terminal device, comprising:

receiving resource indication information of a Transport Block (TB) sent by a network device, wherein the TB occupies one or more target symbol resources of at least one target slot; wherein, the resource indication information is used to indicate a number of slots of the target slot, and/or, the resource indication information is used to indicate a number of symbols of the one or more target symbol resources.

14. The method of claim 13, wherein the resource indication information comprises a first Time Domain Resource Allocation (TDRA) table; wherein,

the first TDRA table comprises at least one Physical Uplink Shared Channel (PUSCH) allocation information element, and the at least one PUSCH allocation information element comprises start and length indication information; the start and length indication information is a Start And Length Indicator Value (SLIV), the SLIV is used to indicate a start symbol position of the first one of the one or more target symbol resources in the first one of the at least one target slot, or, the SLIV is used to indicate a start symbol position and a symbol length of the target symbol resource in each target slot; or, the start and length indication information comprises start symbol indication information S and symbol length indication information L, the start symbol indication information S is used to indicate a start symbol position of the first one of the one or more target symbol resources in the first one of the at least one target slot, or, the start symbol indication information S is used to indicate a start symbol position of the target symbol resource in each target slot; the symbol length indication information L is used to indicate a symbol length of the first one of the one or more target symbol resources in the first one of the at least one target slot, or, the symbol length indication information L is used to indicate a symbol length of the target symbol resource in each target slot.

**15.** The method of claim 14, wherein the resource indication information further comprises slot number indication information,

the slot number indication information is included in a PUSCH allocation information element, and the slot number indication information is used to indicate a number of slots of at least one target slot corresponding to the PUSCH allocation information element comprising the slot number indication information; or,

the slot number indication information is not included in any PUSCH allocation information element, and the slot number indication information is used to indicate a number of slots of at least one target slot corresponding to any PUSCH allocation information element.

**16.** The method of claim 13, wherein,

the resource indication information comprises repetition number indication information, and the repetition number indication information is used to determine the number of slots of the target slot; or,

the resource indication information comprises repetition number indication information and reuse indication information, wherein the repetition number indication information is used to determine the number of slots of the target slot in the case that the reuse indication information is a predefined value or a predefined state.

**17.** The method of claim 16, wherein the resource indication information comprises the repetition number indication information, and the resource indication method further comprises:
receiving first Downlink Control Information (DCI) for scheduling the TB sent by the network device, wherein the first DCI comprises reuse indication information, and the repetition number indication information is used to determine the number of slots of the target slot in the case that the reuse indication information is a predefined value or a predefined state.

**18.** The method of claim 13, further comprising:

receiving second DCI for scheduling the TB sent by the network device, the second DCI comprising a first indication field;
wherein, the first indication field is used to indicate the number of slots of the target slot, wherein the number of slots indicated by the first indication field is determined based on the number of slots indicated by the resource indication information.

**19.** The method of claim 13, wherein the resource indication information comprises a second TDRA table; wherein,

the second TDRA table comprises at least one PUSCH allocation information element, the at least one PUSCH allocation information element comprises a list of start and length indication information;
the list of start and length indication information comprises a plurality of pieces of start and length indication information, a number of pieces of start and length indication information in a valid state included in the list of start and length indication information is equal to the number of slots of the target slot corresponding to the PUSCH allocation information element comprising the list of start and length indication information; and
the start and length indication information in the valid state in the list of start and length indication information is used to indicate a start symbol position and a symbol length of the target symbol resource in each target slot.

**20.** The method of claim 13, wherein the resource indication information comprises a third TDRA table; wherein,

the third TDRA table comprises at least one PUSCH allocation information element, the at least one PUSCH allocation information element comprises slot indication information and start and length indication information;
the slot indication information is used to indicate a start slot position and a number of slots of a plurality of target slots; and
the start and length indication information is used to indicate a start symbol position of the first one of the one or more target symbol resources in the first one of the at least one target slot, or, the start and length indication information is used to indicate a start symbol position and a symbol length of the target symbol resource in each target slot.

21. The method of claim 13, wherein the resource indication information comprises a fourth TDRA table; wherein,

the fourth TDRA table comprises at least one PUSCH allocation information element, the at least one PUSCH allocation information element comprises a SLIV;
in response to the SLIV falling within a first interval, the PUSCH allocation information element corresponds to one target slot, and the SLIV is used to indicate a start symbol position and a symbol length of the target symbol resource in the target slot; or
in response to the SLIV falling within a second interval, the PUSCH allocation information element corresponds to a plurality of target slots, and the SLIV is used to indicate a start slot position and a slot length of the plurality of target slots; and
the first interval and the second interval have no intersection.

22. The method of claim 13, wherein two or more TBs are sent based on the resource indication information, wherein adjacent TBs of the two or more TBs have different redundant versions, or adjacent TBs of the two or more TBs have different information bits, and each TB of the two or more TBs comprises a same number of the target slots, and respective target slots comprise target symbol resources with a same number of symbols and a same symbol position.

23. The method of any one of claims 13-22, wherein each target slot comprises one target symbol resource, and target symbol resources in respective target slots have a same start symbol position and a same symbol length.

24. The method of any one of claims 13-23, wherein in the one or more target symbol resources occupied by the TB, symbols occupied by adjacent target symbol resources are adjacent to each other, or, adjacent target symbol resources are separated by an unavailable symbol and are not separated by an available symbol.

25. A resource indication apparatus, applicable to a network device, comprising a memory, a transceiver and a processor, wherein,
the memory is used to store computer programs, the transceiver is used to send and receive data under control of the processor, and the processor is used to read the computer programs in the memory and perform the following operations:

sending resource indication information of a Transport Block (TB) to a terminal device, wherein the TB occupies one or more target symbol resources of at least one target slot;
wherein, the resource indication information is used to indicate a number of slots of the target slot, and/or, the resource indication information is used to indicate a number of symbols of the one or more target symbol resource.

26. A resource indication apparatus, applicable to a terminal device, comprising a memory, a transceiver and a processor, wherein,
the memory is configured to store computer programs, the transceiver is configured to send and receive data under control of the processor, and the processor is configured to read the computer programs in the memory and perform the following operations:

receiving resource indication information of a Transport Block (TB) sent by a network device, wherein the TB occupies one or more target symbol resources of at least one target slot; wherein
the resource indication information is used to indicate a number of slots of the target slot, and/or, the resource indication information is used to indicate a number of symbols of the one or more target symbol resources.

27. A resource indication apparatus, applied to a network device, comprising:

a sending unit, configured to send resource indication information of a Transport Block (TB) to a terminal device, wherein the TB occupies one or more target symbol resources of at least one target slot;
wherein, the resource indication information is used to indicate a number of slots of the target slot, and/or, the resource indication information is used to indicate a number of symbols of the one or more target symbol resources.

28. A resource indication apparatus, applied to a terminal device, comprising:

a receiving unit, configured to receive resource indication information of a Transport Block (TB) sent by a network device, wherein the TB occupies one or more target symbol resources of at least one target slot; wherein, the resource indication information is used to indicate a number of slots of the target slot, and/or, the resource indication information is used to indicate a number of symbols of the one or more target symbol resources.

29. A processor-readable storage medium having computer programs stored thereon, wherein the computer programs are configured to cause a processor to implement the resource indication method of any one of claims 1-12.

30. A processor-readable storage medium having computer programs stored thereon, wherein the computer programs are configured to cause a processor to implement the resource indication method of any one of claims 13-24.

31. A computer program product comprising computer program codes, wherein when the computer program codes are running on a computer, the resource indication method of any one of claims 1-12 is implemented.

32. A computer program product comprising computer program codes, wherein when the computer program codes are running on a computer, the resource indication method of any one of claims 13-24 is implemented.

33. A communication device comprising a processing circuit and an interface circuit, wherein the interface circuit is configured to receive computer codes or instructions and transmit the computer codes or instructions to the processing circuit, and the processing circuit is configured to execute the computer codes or instructions to implement the resource indication method of any one of claims 1-12.

34. A communication device comprising a processing circuit and an interface circuit, wherein the interface circuit is configured to receive computer codes or instructions and transmit the computer codes or instructions to the processing circuit, and the processing circuit is configured to execute the computer codes or instructions to implement the resource indication method of any one of claims 13-24.

35. A computer program comprising computer program codes, wherein when the computer program codes are running on a computer, the computer is caused to implement the resource indication method of any one of claims 1-12.

36. A computer program comprising computer program codes, wherein when the computer program codes are running on a computer, the computer is caused to implement the resource indication method of any one of claims 13-24.

FIG. 1

Repetition
Type A

| ← slot → | | | |
|---|---|---|---|
| TBS=200 total size=300 | TBS=200 total size=300 | TBS=200 total size=300 | TBS=200 total size=300 |

TB transmission
across slots

| ← slot → |
|---|
| TBS=200 total size=1200 |

RV0  RV2  RV3  RV1

FIG. 2

the network device sends resource indication information of a TB to a terminal device, the TB occupies one or more target symbol resources of at least one target slot, and the resource indication information is configured to indicate a number of slots of the target slot, and/or, a number of symbols of the one or more target symbol resources

101

FIG. 3

FIG. 4

the network device sends resource indication information of a TB to a terminal device, the TB occupies one or more target symbol resources of at least one target slot, the resource indication information includes a first TDRA table, and at least one PUSCH assigned cell included in the first TDRA table includes start and length indication information

201

FIG. 5

TDRA Table

FIG. 6

the network device sends resource indication information of a TB to a terminal device, the TB occupies one or more target symbol resources of at least one target slot, the resource indication information includes repetition number indication information, and the repetition number indication information is configured to determine the number of slots of the target slot; alternatively, the resource indication information includes repetition number indication information and reuse indication information, the repetition number indication information is configured to determine the number of slots of the target slot in the case that the reuse indication information is a predefined value or a predefined state

301

FIG. 7

the network device sends resource indication information of a TB to a terminal device, the TB occupies one or more target symbol resources of at least one target slot, and the resource indication information is configured to indicate a number of slots of the target slot, and/or, a number of symbols of the one or more target symbol resources

401

the network device sends second DCI for scheduling the TB to the terminal device, the second DCI includes a first indication field, and the first indication field is configured to indicate the number of slots of the target slot

402

FIG. 8

FIG. 9

FIG. 10

FIG. 11

the network device sends resource indication information of a TB to the terminal device, the TB occupies one or more target symbol resources of at least one target slot, the resource indication information includes a second TDRA table, the at least one PUSCH assigned cell included in the second TDRA table includes a list of start and length indication information

501

FIG. 12

TB

SLIV0    SLIV1         SLIV2      SLIV3

PUSCH 0 | PUSCH 1         PUSCH2      PUSCH3

|← slot →|                                              t

FIG. 13

the network device sends resource indication information of a TB to the terminal device, the TB occupies one or more target symbol resources of at least one target slot, the resource indication information includes a third TDRA table, at least one PUSCH assigned cell included in the third TDRA table includes slot indication information and start and length indication information

601

FIG. 14

SLIV'

Start (slot) S'     Length (slot) L'

PUSCH0 | PUSCH1 | PUSCH2

slot

FIG. 15

the network device sends resource indication information of a TB to the terminal device, the TB occupies one or more target symbol resources of at least one target slot, the resource indication information includes a fourth TDRA table, at least one PUSCH assigned cell included in the fourth TDRA table includes a SLIV

701

FIG. 16

the terminal device receives resource indication information of a TB sent by a network device, the TB occupies one or more target symbol resources of at least one target slot, the resource indication information is configured to indicate a number of slots of the target slot, and/or, a number of symbols of the one or more target symbol resources

801

FIG. 17

the terminal device receives resource indication information of a TB sent by the network device, the TB occupies one or more target symbol resources of at least one target slot — 901

repetition transmission of multiple TBs is performed according to the resource indication information, RVs or TB information bits of adjacent TBs in the multiple TBs are different, each TB in the multiple TBs contains the same number of target slots, and respective target slots contain target symbol resources with the same number of symbols and the same symbol position — 902

FIG. 18

FIG. 19

FIG. 20

EP 4 280 746 A1

the terminal device receives resource indication information of a TB sent by a network device, the TB occupies one or more target symbol resources of at least one target slot

1001

repetition transmission of multiple TBs is performed based on the resource indication information, adjacent TBs of the multiple TBs have different RVs, or adjacent TBs of the multiple TBs have different information bits, and target symbol resource occupied by the multiple TBs are adjacent

1002

FIG. 21

TB
transmission
Type B

← slot →

TB transmission
Type B
+
Repetition Type
B

RV0  RV2

FIG. 22

TB
transmission
Type B

slot

TB transmission
Type B
+
Repetition Type
B

RV0  RV2

RV0  RV2

FIG. 23

processor ⟵2410

bus interface

transceiver ⟵2400

memory ⟵2420

FIG. 24

processor ⟵2510

bus interface

transceiver ⟵2500

memory ⟵2520

user interface ⟵2530

FIG. 25

2600

resource indication apparatus

sending unit ⟵2601

FIG. 26

2700

resource indication
apparatus

2701

sending unit

FIG. 27

## INTERNATIONAL SEARCH REPORT

International application No.

**PCT/CN2021/142687**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W H04Q H04L

Documentation searched other than minimum documentation to the extent that such documents are included in the fields searched

Electronic data base consulted during the international search (name of data base and, where practicable, search terms used)

CNTXT; ENTXTC; CNABS; WPABS; VEN; USTXT; WOTXT; EPTXT; CNKI; 3GPP: 资源, 传输块, 指示, 资源分配表, 时隙, 符号, resource, transport block, tb, instruction, resource allocation list, slot, symbol

### C. DOCUMENTS CONSIDERED TO BE RELEVANT

| Category* | Citation of document, with indication, where appropriate, of the relevant passages | Relevant to claim No. |
|---|---|---|
| X | WO 2020029256 A1 (GUANGDONG OPPO MOBILE TELECOMMUNICATIONS CORP., LTD.) 13 February 2020 (2020-02-13)<br>    description page 3 line 34 to page 17 line 27 | 1-36 |
| X | US 2020162208 A1 (ELECTRONICS & TELECOMMUNICATIONS RES INST.) 21 May 2020 (2020-05-21)<br>    description paragraphs [0091]-[0204] | 1-36 |
| A | CN 110089181 A (BEIJING XIAOMI MOBILE SOFTWARE CO., LTD.) 02 August 2019 (2019-08-02)<br>    entire document | 1-36 |
| A | WO 2020199958 A1 (ZTE CORPORATION) 08 October 2020 (2020-10-08)<br>    entire document | 1-36 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 March 2022** | **21 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/142687**

| Patent document cited in search report | | | Publication date (day/month/year) | Patent family member(s) | | | Publication date (day/month/year) |
|---|---|---|---|---|---|---|---|
| WO | 2020029256 | A1 | 13 February 2020 | US | 2021153212 | A1 | 20 May 2021 |
| | | | | EP | 3820100 | A1 | 12 May 2021 |
| | | | | EP | 3820100 | A4 | 30 June 2021 |
| US | 2020162208 | A1 | 21 May 2020 | None | | | |
| CN | 110089181 | A | 02 August 2019 | US | 2021410125 | A1 | 30 December 2021 |
| | | | | WO | 2020181460 | A1 | 17 September 2020 |
| | | | | SG | CN 11202109985 U | A | 28 October 2021 |
| | | | | KR | 20210134777 | A | 10 November 2021 |
| | | | | EP | 3940981 | A1 | 19 January 2022 |
| WO | 2020199958 | A1 | 08 October 2020 | KR | 20210141741 | A | 23 November 2021 |
| | | | | EP | 3952533 | A1 | 09 February 2022 |

Form PCT/ISA/210 (patent family annex) (January 2015)

**EP 4 280 746 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110057561